# EUROPEAN PATENT APPLICATION

(11) **EP 2 219 317 A1**
(43) Date of publication of application: **18.08.2010**
(21) Application number: 08848417.5
(22) Date of filing: 10.11.2008
(51) Int. Cl.: H04L 9/08, G08B 25/04, G08B 25/10, H04L 9/10, H04L 9/32, H04M 11/04

(54) **KEY MANAGEMENT DEVICE AND INFORMATION TRANSMISSION SYSTEM USING THE SAME**

(30) Priority: 09.11.2007 JP 2007291834
(71) Applicant: Icon Corp., Yokohama-shi, Kanagawa 2210056 (JP)
(72) Inventor: TSUCHIYA, Toshiko, Yokohama-shi Kanagawa 221-0056 (JP)
(74) Representative: Klunker, Hans-Friedrich
(86) International application number: PCT/JP2008/003247
(87) International publication number: WO 2009/060631

(57) **Abstract**

An information transmission system includes a terminal device connected to a server device. Transmission destination information and transmission source information are encrypted and correlated with a user identifier when these information are stored in a storage unit for the server device. By using the user identifier and a decryption key which are reported when a transmission command button of the terminal device is pressed, the transmission destination information and the transmission source information are read out and decrypted by a decryption unit. A transmission unit for the server device transmits the transmission source information to a transmission destination specified by the transmission destination information.

## Description

### TECHNICAL FIELD

The present invention relates to a key management device and an information transmission system using the same, for example. Particularly, the present invention relates to the key management device and the information transmission system in which only the user possesses an encryption key for encrypting and decrypting an information.

### BACKGROUND ART

In the conventional key management device, the encryption key and the decryption key are managed by the specific administrators (see the patent document 1, for example). However, in such a case, a person not an administrator becomes to know the encryption key when the administrator is changed due to personnel relocation. This case is not preferable for security, and the leakage of information may happen.

Therefore, in recent years, many kinds of devices to prepare for the contingency such as accidents or crimes, are developed, however, such devices are difficult to use the personal information effectively from the viewpoint of security.
Incidentally, as one kind of these devices, there is an emergency notification device for notifying an occurrence of emergency to the predetermined contact address in a state of emergency (see the patent document 2, for example).
Patent Document 1 : JP2004-248330A
Patent Document 2 : JP2004-255539A

### DISCLOSURE OF THE INVENTION

### PROBLEMS TO BE SOLVED BY THE INVENTION

The purpose of the present invention is to provide the information transmission system and the information transmission method, each of which prevents the leakage of personal information by managing the encryption key and the decryption key, utilizes the personal information for rescue operation effectively, stores the rescue support information necessary for rescuing securely and transmits the rescue support information to the rescue support organization with simple operation in a state of emergency.

### MEANS TO SOLVE THE PROBLEM

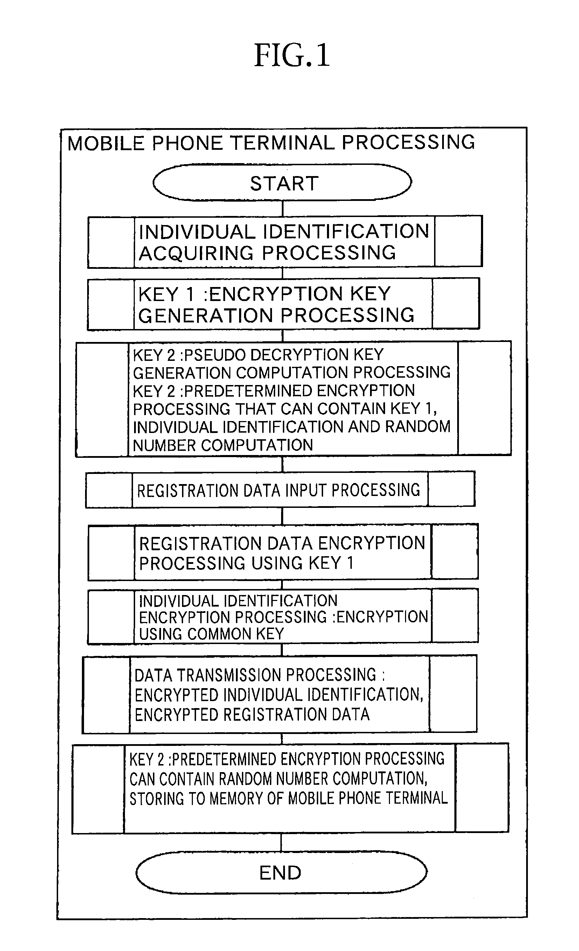

As shown in Figure 1, for example, the individual identification information of the mobile phone terminal is acquired automatically and the encryption key is generated automatically from a predetermined information. Furthermore, the decryption key is automatically generated using the predetermined encryption processing which can contain the encryption key, individual identification information and random number computation. The object data of encryption is input from the operation unit and encrypted using the encryption key. The individual identification information is encrypted using the predetermined common key.

The encrypted object data and the encrypted individual identification information are sent from the transmission unit in the terminal device to the server device. The decryption key is stored into the memory unit in the terminal device when the encrypted object data and the identification information are sent from the transmission unit of the terminal device to the server device. When the process is completed, the data except for the decryption key are erased from the terminal device. This processing has a characteristic that even the user cannot know the keys for encrypting and decrypting the object data, only the decryption key for decrypting the object data is registered in the mobile phone terminal and the encryption key for encrypting the object data exists nowhere because it is generated automatically each time the data object is encrypted.

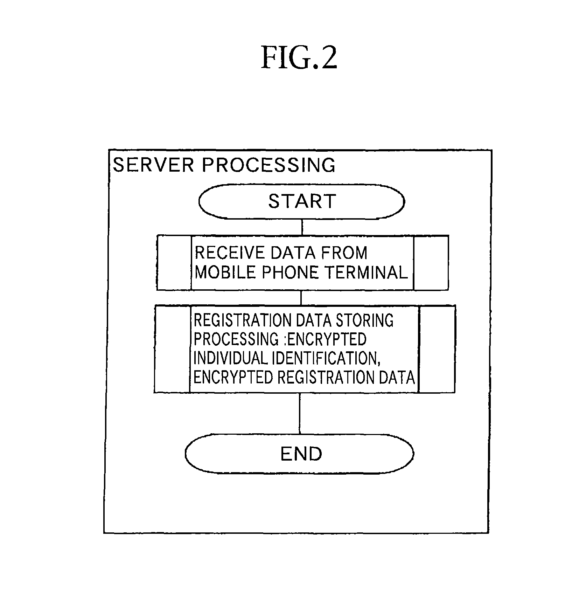

As shown in Figure 2, the server device receives the data from the terminal device, combines the encrypted object data and the encrypted individual identification information sent from the terminal device, and stores them into memory unit of the server device.

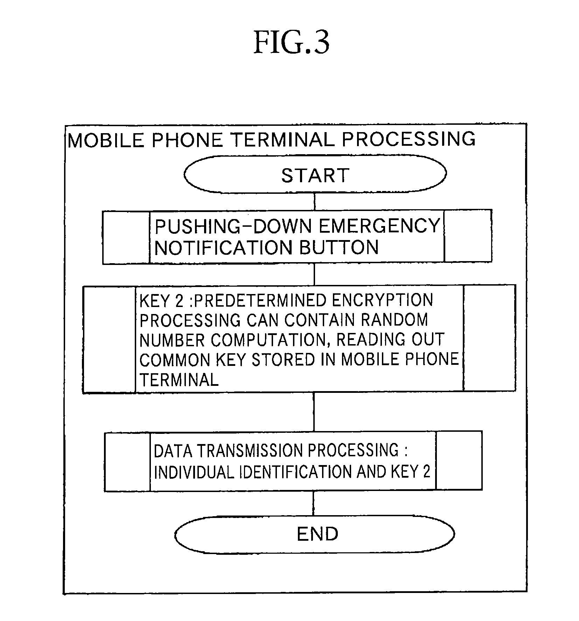

As shown in Figure 3, for example, when the emergency notification button of the mobile phone terminal is pushed down, the information related to the emergency notification is generated and transmitted from the transmission unit in the terminal to the server device. Then, the decryption key stored in the memory unit in the terminal device is read out and is transmitted to the server device with the transmitted emergency information.

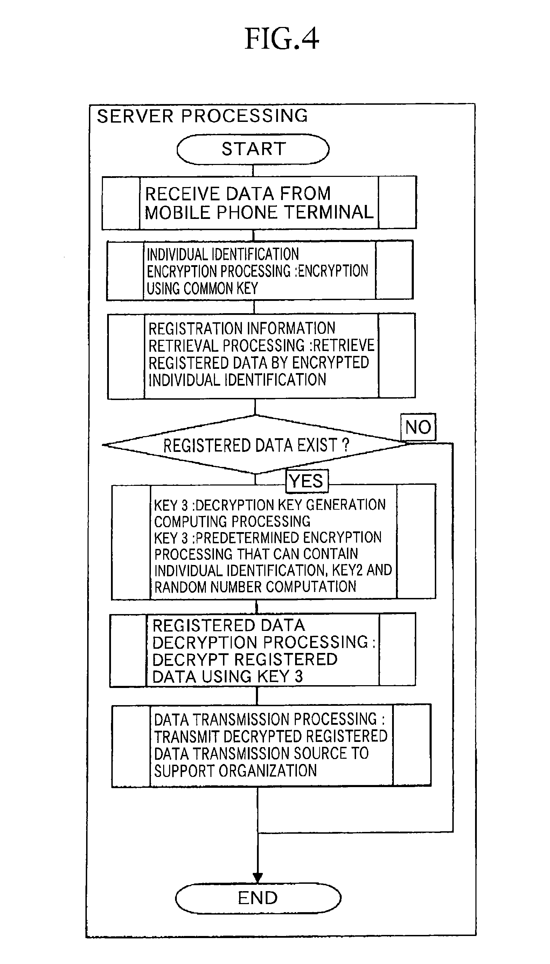

As shown in Figure 4, the server device receives the information related to the emergency notification from the server device, extracts the individual identification information from the received emergency information, and encrypts the individual identification information using the predetermined common key. Furthermore, the server device extracts the corresponding encrypted data from the object data of the encryption stored in the memory unit in the server using the encrypted individual identification information.
The processing is completed when the corresponding data does not exist in the object data stored in the memory unit in the server.

Oppositely, the following processing is executed when the corresponding data can be extracted from the object data stored in the memory unit in the server.
The decryption key is extracted from the received emergency information and the encryption key is automatically generated using the predetermined encryption processing which can contain the extracted decryption key, non-encrypted individual identification information and random number computation.
The encrypted data extracted from the memory unit in the server is decrypted using the encryption key automatically generated from the decryption key. The data for the support organization, which is generated based on the decrypted data, is transmitted from the transmission unit in the server device.

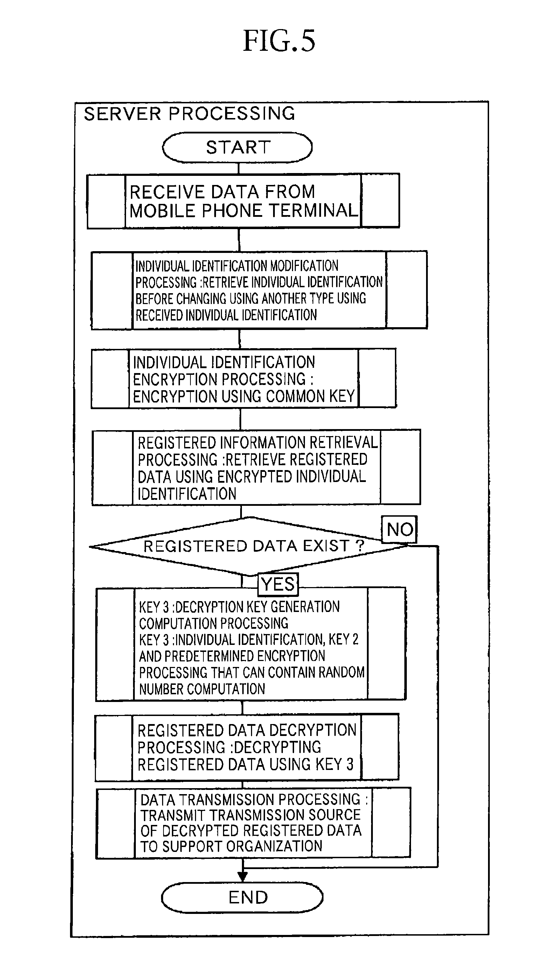

Figure 5 shows the processing when the mobile phone terminal is changed to one of other types of the mobile phones, for example. Firstly, procedure for changing the type of the equipment is performed in advance, the old individual identification information and new individual identification information are registered in the memory unit in the server device with correlating these old and new individual identification information each other. Additionally, the decryption key stored in the memory unit in the old mobile phone terminal is transferred to the new mobile phone terminal. When the server device receives the data from the mobile phone terminal, the individual identification information is extracted from the received emergency information, then, the corresponding individual identification information is extracted from the data stored in the memory unit in the server.

The old identification information correlated to the extracted new identification information is acquired and encrypted using the predetermined common key. Furthermore, the encrypted corresponding data is extracted from the object data of encryption stored in the memory unit in the server device using the encrypted old individual identification information. Then, the processing is completed when the corresponding data does not exist in the object data of encryption stored in the memory unit in the server device. In contrast, the following processing are performed when the corresponding data could be extracted from the object data of encryption stored in the memory unit of the server.

The decryption key is extracted from the received emergency information and the encryption key is generated automatically using the predetermined encryption processing which can contain the encryption key, individual identification information and random number computation.
The encrypted data is extracted from the memory unit in the server device, and the encrypted data is decrypted using the encryption key automatically generated from the decrypted key. The data for support organization, which is generated based on the decrypted data, is transmitted from the transmission unit of the server.

Moreover, the information transmission system according to a preferred embodiment of the present invention relates to the information transmission system in which a terminal device and a server device are connected, wherein the terminal device comprises a terminal device memory unit that stores an user identification information for identifying the user owning the terminal device and stores a decryption key; an encryption processing unit that encrypts an information using an encryption key; a terminal device transmission unit that transmits a transmission destination information and a transmission source information encrypted using the encryption key; a key generation unit that generates the encryption key and the decryption key; an operation unit that has information input buttons containing a transmission command button; a terminal device control unit that generates a transmission command, and reads out the user identification information and the decryption key from the terminal device memory unit when a pushing-down of the transmission command button by the user is notified from the operation unit; a terminal device transmission unit that transmits the transmission command, the user identification information and/or the decryption key to the server device: and the server device comprises a decryption unit that reads out the encrypted transmission destination information and the encrypted transmission source information from the server device memory unit based on the user identification information and decrypts the transmission destination information and the transmission source information using the decryption key when the decryption key is provided to a server device memory unit that relates the transmission destination information containing an information about the destination of the transmission with the transmission source information containing an information about the user owning the terminal device, each of which has been encrypted by the terminal device; a server device control unit that executes the notification and cancellation of emergency mode from the terminal device and; a server device memory unit that relates the encrypted transmission destination information and the encrypted transmission source information with the user identification information; a server device transmission unit that transmits the transmission source information to the transmission destination specified by the transmission destination information.

The terminal device according to the present invention is preferable to comprise the terminal device receiving unit that receives the predetermined information from the server device and/or another terminal device; a camera unit that takes the predetermined still image information and/or the predetermined moving image information; a loudspeaker used for hearing a voice; a microphone unit that inputs uttered voice or surrounding sound information and; a picture display unit that displays the predetermined information and makes it to be confirmed visually. Furthermore, the terminal device is preferable to comprise a terminal device signal transmission unit that transmits at least one signal of radio wave, sound wave or ray of light (visible ray can be employed) to another terminal device; a terminal device signal receiving unit that receives at least one signal of them from said another terminal device; a terminal device computation unit that measures the distance to said another terminal device by executing the predetermined computation processing using the signal received by the terminal device signal receiving unit and; a terminal device alarm unit that outputs a warning (i.e. alarm) corresponding to the distance measured by the terminal device computation unit. Moreover, it is preferable to comprise a terminal device signal reflection unit that reflects the predetermined signal output from another terminal device signal transmission unit.

Additionally, the server device according to the present invention is preferable to comprise the server device receiving unit that receives the predetermined information from the terminal device.

Incidentally, the terminal device is at least one of a mobile phone, PDA, a wristwatch with communication function, portable goods (for example, a pencil or a necklace), a landline telephone, a personal computer of small size or other thing which can transmit and receive the predetermined information through the network.

The terminal device memory unit in the terminal device according to the present invention is a memory to store the user identification information used for identifying the user and/or to store the decryption key, and can be overwritten or rewritten at any time. Incidentally, the terminal device memory unit is a storage medium having the predetermined capacity. The terminal device memory unit includes the medium being able to temporarily store the user identification information, which is used for performing the identification of the user, for inputting the user identification information to the server device (for example, volatile memory).

The operation unit of the terminal device according to the present invention indicates numeric keys (including '0' through '9' , '#' and '*') and other keys. One or more keys of the operation unit can be used as a transmission command button for transmitting the transmission command by performing an exceptional operation (for example, pushing the key long time (about three minutes) or pushing a plurality of the keys following to the predetermined order). In addition, the button exclusive to the transmission command can be provided with the operation unit. For example, the operation unit can comprise a exclusive button, which is used to contact the public organization for requesting an ambulance or policemen, having a general mark indicating the corresponding public organization. Furthermore, the operation unit can comprise a mechanism to contact the private security service when the predetermined button is pushed long time. The combinations of such mechanisms are not restricted, and the mechanisms can be set up by the user. Incidentally, the case the user needs such operation is called 'emergency mode' generally.

The control unit of the terminal device according to the present invention indicates the unit having the functions to generate the transmission command at a timing when the transmission command button of the operation unit is pushed and to read out the user identification information and/or the decryption key for transmitting them from the terminal device memory unit to the server device. Moreover, the control unit is preferable to comprise the function to generate location information one by one in the predetermined time period (this function is called 'GPS generation function' hereinafter, GPS is short for Global Positioning System) when the pushing-down of the transmission command button from the operation unit is notified. Furthermore, the control unit is preferable to have the function to invalidate the operation of shutting-down the power supply with displaying the picture indicating the shutting-down of the power supply on the picture display unit of the terminal device, and to read out and decrypt at least the location information from the server device memory unit, when the operation of shutting-down the power supply is performed after the pushing-down of the transmission command button is notified. The control unit comprises the function to suspend the generation of the location information by the predetermined input operation of the operation unit after pushing-down of the transmission command button, and is preferable to comprise a biometrics analysis authentication function which can suspend the generation of the location information when the user's identity is verified based on the analysis of the organism (for example, vocal cords, fingerprint, pulsation, eyeball or other organic information is included) . Incidentally, the control unit includes the unit into which the computer programs or software for implementing these functions are installed and the software are stored into the internal memory of the unit under the condition to implement these functions.

The terminal device transmission unit of the terminal device according to the present invention is the unit which can communicate using the predetermined protocol via the network and comprises the function to transmit the user identification information and the decryption key to the server device. In addition, the transmission unit is preferable to comprise the function to transmit the location information of the terminal device generated in the control unit to the server device one by one in the predetermined time period (this function is called 'GPS server device transmission function' hereinafter). Incidentally, the transmission unit includes the unit into which the computer programs or software for implementing these functions are installed and the software are stored into the internal memory of the unit under the condition to implement these functions.

The user identification information stored into the terminal device memory unit in the terminal device according to the present invention contains at least one of the name of the originator (phonograms are contained), the birth data of the originator, the user identification number (or UTN) (fifteen figures) of the mobile phone terminal, FOMA(trademark) card identity number (or UIM) of the mobile phone terminal, ID of the mobile phone terminal, password of the mobile phone terminal and other information for identifying the user.

The decryption key according to the present invention is the key for decrypting the personal information containing the user identification information. The decryption key can be registered and managed only by the user.

The encryption unit in the server device is the unit which comprises the function to encrypt the information using the predetermined processing for preventing the information leakage to the third person, when the user registers at least one of the user identification information, transmission destination information, transmission source information and other secret information related to the user. Incidentally, the encryption unit includes the unit into which the computer programs or software for implementing these functions are installed and the software are stored into the internal memory of the unit under the condition to implement these functions. Moreover, the encryption unit comprises each function corresponding to the pseudo-encryption key generation processing unit related to the encryption key management device, the first and second reading out unit, pseudo-encryption key changing processing unit and data processing unit described above.

The decryption unit of the server device is the unit which comprises the function to read out the various kinds of the user's information with correlating to the received user identification information from the server device memory unit, and decrypt them using the received decryption key, when receiving the transmission command, the decryption key and the user identification information transmitted from the terminal device. The decryption unit is preferable to comprise the function to read out and decrypt the transmission destination information and the transmission source information stored by being correlated to the behavioral pattern selected and stored in advance from among the plural kinds of the behavioral patterns. Incidentally, the decryption unit includes the unit into which the computer programs or software for implementing these functions are installed and the software are stored into the internal memory of the unit under the condition to implement these functions. In addition, the decryption unit comprises each function of the second reading out unit of the encryption key management device and data processing unit.

The server device control unit in the server device according to the present invention comprises the function to control the transmitting of the transmission command or the location information to the specified rescue support organization when the exclusive button or the predetermined button of the operation unit in the terminal device is pushed-down long time. The server device control unit is preferable to comprise the function to execute only one of the transmissions when two or more rescue support organization are applicable for the transmission destinations. Furthermore, the control unit is preferable to comprise the function to cancel the emergency mode and to request the cancellation of the emergency mode to the terminal device when receiving the cancellation notification of emergency mode from the predetermined rescue support organization (except for the case the rescue support organization has constructed an information transmission system comprising server device). The cancellation request can specify the user by combining the predetermined user identification information and the predetermined cancellation key, and only the person having the user identification information can request the cancellation.

The server device memory unit in the server device according to the present invention is the unit which comprises the function to store the encrypted transmission destination information and encrypted transmission source information with correlating to the encrypted user identification information and the function to store the behavioral patterns (hereinafter, called TPO (Time, Place and Occasion) in the present specification) with correlating to the user identification information. The server device memory unit is preferable to encrypt the predetermined information using the decryption key and the encryption key managed only by the user, and supplement, modify and/or correct them at any time. Furthermore, the server device memory unit is preferable to decrypt the predetermined information using the decryption key, and display it on the picture display unit for viewing at any time. In addition, the server device memory unit is preferable to comprise the function to store each user's individual information following to the registration item (or the format) supplied from the predetermined rescue support organization for preparing against the disaster. Incidentally, the server device memory unit includes the unit into which the computer programs or software for implementing these functions are installed and the software are stored into the internal memory of the unit under the condition to implement these functions. In addition, the server device memory unit comprises each function of the memory unit in the encryption key management device.

The server device transmission unit in the server device according to the present invention is the unit which can communicate using the predetermined protocol via the network and which comprises the function to transmit the transmission source information to the transmission destination specified by the transmission destination information. In addition, the transmission unit is preferable to comprise the function to transmit at least the location information of the terminal device one by one in the predetermined time period when receiving the location information from the terminal device one by one in the predetermined time period (this function is called 'GPS destination transmission function' hereinafter). Incidentally, the transmission unit includes the unit into which the computer programs or software for implementing these functions are installed and the software are stored into the internal memory of the unit under the condition to implement these functions.

The transmission destination information and the transmission source information encrypted by the encryption unit in the server device according to the present invention are the information of which the user can previously input by every TPO using the operation unit of the terminal device based on the predetermined format, or the information of which the user can input using the operation unit of the terminal unit based on the registration item (or the format) supplied by the predetermined rescue support organization for preparing against the disaster. It is preferable that the user can input the predetermined information according to the characteristic (for example, the infancy, the pregnant women, the elderly are included), the occupation (for example, the job related to the passenger plane, the passenger boat and the fishery are included), the hobby (for example, the mountain climbing, the sailboat and the travel are included), the circumstance (for example, the personal information trading is included), the unforeseen circumstance capable to occur in the life (for example, the cases in which speedy rescue is necessary because of the urgent situation for user, the distress, the lost child, the wandering of dementia patient, the disaster, the man-made disaster, the natural calamity, the accident, the crime are included) of the user.

Concretely, the transmission destination information contains information made by at least one or the combination of the TPO, the transmission condition (for example, the voice transmission and electronic-mail are included) to the rescue support organization suitable for the occurred disaster (for example, cutting off of the water supply, the stoppage of gas supplying, the power failure, the fire, the destruction of the structure, the tornado or others), the telephone number, the electronic-mail address, GPS communication information renewal interval ( 1 minute, 5 minutes or 10 minutes etc.) or other information necessary for accessing the rescue support organization. Incidentally, it is preferable that the user's location information is not renewed using the GPS communication and it is most preferable that the location information of the present address is used, because the predetermined rescue support organization cannot specify the location of the disaster occurring location and the rescue support location if the user's location information is frequently renewed by the GPS communication. Incidentally, in the case where the TPO is the 'ship' for example, the transmission source information contains the kind of the ship, the name of the ship, the number of crews including the captain and fellow passenger, the place of leaving, the destination, the purpose of the navigation, the scheduled data of return to port and all other information for distinguishing the ship. Furthermore, the transmission source information contains the user identification information of which the user wishes to disclose to the rescue support organization.

Incidentally, the transmission destination according to the present invention is the rescue support organization, the person appointed by the user and/or the organization appointed by the user. As the examples of the rescue support organization, at least one of the police station (i.e. the emergency telephone number to the police), fire station (i.e. the emergency telephone number to the fire station), the coast guard (i.e. the emergency telephone number to the coast guard), the local authority, the hospital, the nursing institution, the institution of medical care, the private security service or other organizations for protecting the securities of the commonalty are contained. As the examples of the person appointed by the user, the terminal device owned by the appointed person is contained. Hereby, in the case where the user does not hold the cylinder type key or the card type key, or in the case where the user forgets the unlocking number, it becomes possible to notify the unlocking number to the third person corresponding to the transmission destination. Additionally, it is possible that the rescue support organization corresponding to the transmission destination and/or the person appointed by the user construct the information transmission system containing the server device.

By such construction, the user can store various kinds of information to the server device memory unit of the server device one by one using the operation unit of the terminal device and can inspect them as necessary. In this case, the user's disagreed leakages of information to the third person and hackings can certainly be prevented because the information is encrypted using the peculiar encryption key capable to be managed only by the user whenever transmitted to the server and the encrypted information needs to be decrypted using the decryption key when inspected. Therefore, the user can encrypt the user identification information, the transmission destination information and the transmission source information which is different by the TPO or the information peculiar to the user prepared against the disaster, and can manage them with feeling at ease by storing the server device memory unit in advance.

Hereby, the transmission command can be generated by pushing-down the transmission command button of the operation unit in the terminal device when the user encounters an unexpected circumstance and needs urgent rescue. Then, the predetermined information and the decryption key can be read out from the terminal device memory unit and transmitted, the predetermined information encrypted and stored in the server device memory unit can be decrypted using the decryption key, and the rescue support organizations registered as the transmission destinations, those are different by the TPO or occurring accident, can be accessed. Moreover, the rescue support organization can realize quick and accurate rescue activities based on the user identification information and the transmission source information. In addition, the rescue support organization can realize rescue activities more quickly, because the terminal device control unit and terminal device transmission unit of the terminal device comprise the GPS generation function and the GPS server device transmission function respectively and the server device transmission unit of the server device comprises the GPS destination transmission function, and so the server device can receive the location information of the user owning the terminal device at the predetermined time interval and can transmit the location information to the rescue support organization.

The information transmission method according to a preferred embodiment of the present invention in which the terminal device and the server device are connected, comprising a transmission information generation step of generating a transmission destination information containing an information related to a transmission destination, a transmission source information containing an information related to a user owning the terminal device and an encryption key, transmitting them to the server device, and storing the encryption key to a terminal device memory unit; an encryption step of encrypting the transmission destination information and the transmission source information using the encryption key when the transmission destination information, the transmission source information and the encryption key are provided to the server device; a storing step of correlating the encrypted transmission destination information and the encrypted transmission source information to a user identification information for identifying the user owning the terminal device, and storing them to the server device memory unit; a transmission command generation step of generating a transmission command and reading out the user identification information and the encryption key from the terminal device memory unit when the user's pushing-down of the transmission command button is notified from an operation unit having the transmission command button; a command transmission step of transmitting the transmission command, the user identification information and the encryption key from the terminal device to the server device; a decryption step of reading out the encrypted transmission destination information and the encrypted transmission source information from the server device memory unit based on the user identification information and decrypting the encrypted transmission destination information and the encrypted transmission source information using the encryption key when the transmission command, the user identification information and the encryption key are provided from the terminal device; and a source information transmission step of transmitting the transmission source information to the transmission destination specified by the transmission destination information.

The encryption key managing device according to a preferred embodiment of the present invention comprises a first real encryption key generation unit that generates a real encryption key using a pseudo encryption key when the pseudo encryption key is provided for generating the real encryption key used for encrypting a object data of the encryption; a first pseudo encryption key correspondence data generation unit that generates a pseudo encryption key correspondence data corresponding to the pseudo encryption key using the pseudo encryption key and the real encryption key; a first correspondence table generation unit that generates a table with correlating the pseudo encryption key to the pseudo encryption key correspondence data; a first encryption processing unit that executes a process for encrypting the correspondence table; and a memory unit that stores at least one of the encrypted pseudo encryption key, the pseudo encryption key correspondence data, the correspondence table, the real encryption key and the encryption object data.

The first real encryption key generation unit generates the real encryption keys at random by performing the predetermined computation processing of the pseudo encryption key using the predetermined real encryption key generation function when the pseudo encryption key is input, and outputs it to the first pseudo encryption key correspondence data generation unit. Incidentally, the first real encryption key generation unit includes the unit into which the computer programs or software for implementing this function are installed and the software are stored into the internal memory of the unit under the condition to implement this function.

The real encryption key according to a preferred embodiment of the present invention is the key used for encrypting the object data of the encryption. There are cases in which the real encryption key is called 'encryption key for data' or 'encryption key (for data)', hereinafter.

The pseudo encryption key according to the preferred embodiment of the present invention is the key used for generating the real encryption key. There are cases in which the pseudo encryption key is called 'encryption key for key' or 'encryption key (for key)'.

The first pseudo encryption key correspondence data generation unit generates the pseudo encryption key correspondence data by performing the predetermined computation processing (for example, the processing of deducting the pseudo encryption key from the real encryption key) using the predetermined pseudo encryption key correspondence data generation function and outputs the computation result to the correspondence table generation unit when the pseudo encryption key and the real encryption key are input. Incidentally, the pseudo encryption key correspondence data is used with the pseudo encryption key when the real encryption key is generated at a latter step. The pseudo encryption key correspondence data generation unit includes the unit into which the computer programs or software for implementing this function are installed and the software are stored into the internal memory of the unit under the condition to implement this function.

The pseudo encryption key correspondence data according to the preferred embodiment of the present invention is the data correlated to the pseudo encryption key. Incidentally, the pseudo encryption key correspondence data is called 'check ID data' hereinafter.

The first correspondence table generation unit generates the correspondence table in which the pseudo encryption key and the pseudo encryption key correspondence data are correlated, and outputs them to the encryption processing unit when the pseudo encryption key and the pseudo encryption key correspondence data corresponding to this pseudo encryption key are input. The first correspondence table generation unit includes the unit into which the computer programs or software for implementing this function are installed and the software are stored into the internal memory of the unit under the condition to implement this function.

When plural pseudo encryption key according to the preferred embodiment of the present invention are input and specified, plural pseudo encryption key correspondence data corresponding to each pseudo encryption key are generated. In this case, the correspondence table generation unit generates the correspondence tables by correlating each pseudo encryption key to each pseudo encryption key correspondence data.

The first encryption processing unit according to the preferred embodiment of the present invention generates the encrypted correspondence table by performing the encryption processing of the correspondence table and stores it into the memory unit. The first encryption processing unit includes the unit into which the computer programs or software for implementing this function are installed and the software are stored into the internal memory of the unit under the condition to implement this function.

Incidentally, there are cases in which the unit including the first real encryption key generation unit, the first pseudo encryption key correspondence data generation unit, the first correspondence table generation unit and the first encryption processing unit is called 'pseudo encryption key generation processing unit'.

Moreover, the memory unit according to the preferred embodiment of the present invention includes the unit comprising the storage medium of predetermined capacity which stores at least one of the encrypted pseudo encryption key, the encrypted pseudo encryption key correspondence data, the encrypted correspondence table, the encrypted real encryption key and the encrypted encryption correspondence data, and into which the computer programs or software for implementing this function are installed and the software are stored under the condition to implement this function.

By such construction, the real encryption key can be generated by the first real encryption key generation unit when the pseudo encryption key is provided, the pseudo encryption key correspondence data correlated to the pseudo encryption key can be generated by the first pseudo encryption key correspondence data generation unit when the pseudo encryption key and the generated real encryption key are provided, the correspondence table correlated to the pseudo encryption key and the generated pseudo encryption key correspondence data can be generated by the first correspondence table generation unit and the correspondence table can be encrypted and stored into the memory unit by the first encryption processing unit.

The encryption key management device according to the present invention comprises a first decryption unit that decrypts and outputs both of the pseudo encryption key and the pseudo encryption key correspondence data as an changing obj ect or decrypts and outputs only the pseudo encryption key correspondence data; a second real encryption key generation unit that generates the real encryption key using the pseudo encryption key and the pseudo encryption key correspondence data as the changing object; a second pseudo encryption key correspondence data generation unit that changes the pseudo encryption key correspondence data by generating the pseudo encryption key correspondence data corresponding to the changing of pseudo encryption key using the changed pseudo encryption key and the real encryption key when the changed pseudo encryption key and the real encryption key generated by the second real encryption key generation unit are provided; a second correspondence table generation unit that generates a table correlated to the changed pseudo encryption key and the changed pseudo encryption key correspondence data; and a second encryption processing unit that performs the encryption processing of the newly generated correspondence table.

The first decryption unit decrypts the pseudo encryption key and the pseudo encryption key correspondence data by performing the decryption processing of the encrypted objects of changing, that is, both of the pseudo encryption key and the pseudo encryption key correspondence data or only the pseudo encryption key correspondence data to the real encryption key generation unit. Furthermore, The first decryption unit outputs the decrypted pseudo encryption key and the decrypted pseudo encryption key correspondence data. Incidentally, the first decryption unit includes the unit into which the computer programs or software for implementing this function are installed and the software are stored into the internal memory of the unit under the condition to implement this function.

The second real encryption key generation unit according to the present invention generates the real encryption key by performing the predetermined computation processing (for example, the processing of adding the pseudo encryption key to the pseudo encryption key correspondence data) of the pseudo encryption key of the changing object and the pseudo encryption key correspondence data using the predetermined real encryption key generation function and outputs it to the second pseudo encryption key correspondence data generation unit when the pseudo encryption key of the changing object and the pseudo encryption key correspondence data are provided. The second real encryption key generation unit includes the unit into which the computer programs or software for implementing this function are installed and the software are stored into the internal memory of the unit under the condition to implement this function.

Incidentally, the second real encryption key generation unit according to the present invention can generate the real encryption key using the pseudo encryption key input from the input unit by the operator, not using the pseudo encryption key read out from the memory unit. In this case, the decryption processing unit may perform the decryption processing only to the encrypted pseudo encryption key correspondence data.

The second pseudo encryption key correspondence data generation unit generates a new pseudo encryption key correspondence data by performing the predetermined computation processing (for example, the processing of deducting the pseudo encryption key from the real encryption key) of the pseudo encryption key and the real encryption key using the predetermined pseudo encryption key correspondence data generation function when the newly input pseudo encryption key and the real encryption key are provided, and outputs it to the correspondence table generation unit. The second pseudo encryption key correspondence data generation unit includes the unit into which the computer programs or software for implementing this function are installed and the software are stored into the internal memory of the unit under the condition to implement this function.

The second correspondence table generation unit according to the present invention generates a new correspondence table in which the pseudo encryption key is correlated to the pseudo encryption key correspondence data and outputs it to the second encryption processing unit when the newly input pseudo encryption key and the newly generated pseudo encryption key correspondence data corresponding to this pseudo encryption key are input. The second correspondence table generation unit includes the unit into which the computer programs or software for implementing this function are installed and the software are stored into the internal memory of the unit under the condition to implement this function.

The second encryption processing unit according to the present invention generates the encrypted correspondence table by performing the encryption processing of the newly generated correspondence table and stores it into the memory unit. The second encryption processing unit includes the unit into which the computer programs or software for implementing this function are installed and the software are stored into the internal memory of the unit under the condition to implement this function.

By such construction, when the pseudo encryption key is changed, the pseudo encryption key correspondence data is changed based on the changing of the pseudo encryption key, by generating a new pseudo encryption key correspondence data using the firstly generated real encryption key.

Incidentally, the unit including the first decryption unit, the second real encryption key generation unit, the second pseudo encryption key correspondence data generation unit, the second correspondence table generation unit and the second encryption processing unit is called 'pseudo encryption key changing processing unit' hereinafter.

The encryption key management device according to the present invention comprises a reading out unit that reads out at least the pseudo encryption key correspondence data correlated to the pseudo encryption key of changing object from the memory unit when the request for changing the pseudo encryption key is provided.

By such construction, the first reading out unit can read out at least the pseudo encryption key correspondence data correlated to the pseudo encryption key of the changing object from the memory unit. The first reading out unit includes the unit into which the computer programs or software for implementing this function are installed and the software are stored into the internal memory of the unit under the condition to implement this function.

The encryption key management unit according to the present invention comprises a second decryption unit that decrypts and outputs both of the pseudo encryption key and the pseudo encryption key correspondence data correlated to the pseudo encryption key, or decrypts and outputs only the pseudo encryption key correspondence data; a third real encryption key generation unit that generates and outputs the real encryption key using the pseudo encryption key and the pseudo encryption key correspondence data; and a data encryption processing unit that performs the predetermined encryption processing of the object data of encryption using the real encryption key generated by the third real encryption key generation unit.

The second decryption processing unit generates the pseudo encryption key and the pseudo encryption key correspondence data by performing the decryption processing of both of the encrypted pseudo encryption key and the pseudo encryption key correspondence data or the decryption processing of only the pseudo encryption key correspondence data, and outputs to the real encryption key generation unit. The second decryption unit includes the unit into which the computer programs or software for implementing this function are installed and the software are stored into the internal memory of the unit under the condition to implement this function.

The third real encryption key generation unit generates the real encryption key by performing the predetermined computation processing (for example, the processing of adding the pseudo encryption key to the pseudo encryption key correspondence data) of the pseudo encryption key and the pseudo encryption key correspondence data using the predetermined real encryption key generation function when the pseudo encryption key and the pseudo encryption key correspondence data are provided, and outputs it to the data encryption processing unit. The third real encryption key generation unit includes the unit into which the computer programs or software for implementing this function are installed and the software are stored into the internal memory of the unit under the condition to implement this function.

Incidentally, the third real encryption key generation unit according to the present invention can generate the real encryption key using the pseudo encryption key input from outside, not using the pseudo encryption key read out from the memory unit. In this case, the second decryption processing unit may perform the decryption processing only to the encrypted pseudo encryption key correspondence data.

The data encryption processing unit according to the present invention performs the predetermined encryption processing of the object data of encryption using the real encryption key. The data encryption processing unit includes the unit into which the computer programs or software for implementing this function are installed and the software are stored into the internal memory of the unit under the condition to implement this function.

In such construction, the real encryption key necessary for performing the encryption processing is not stored in the memory unit, but generated using the pseudo encryption key stored in the memory unit whenever the encryption processing is performed. Therefore, even the operator who is the administrator of the encryption key management device cannot know the real encryption key.

Incidentally, there are cases in which the unit including the second decryption processing unit, the third real encryption key generation unit and the data encryption processing unit is called 'data processing unit' hereinafter. It is desirable that the object data of encryption is decrypted by the data processing unit.

The encryption key management device according to the present invention comprises a second reading out unit that reads out at least the pseudo encryption key correspondence data correlated to the pseudo encryption key of the object of reading out from the memory unit when the command request for encrypting the object data of the encryption is provided.

By such construction, the second reading out unit can read out at least the pseudo encryption key correspondence data correlated to the pseudo encryption key of the object of reading out from the memory unit, and can encrypt the object data of the encryption safely. The second reading out unit includes the unit into which the computer programs or software for implementing this function are installed and the software are stored into the internal memory of the unit under the condition to implement this function.

### EFFECT OF THE PRESENT INVENTION

The information transmission system and the method according to the present invention can prevent the leakage of information easily and certainly while reducing the effort necessary for managing the encryption key and the decryption key. Additionally, the present invention can store the rescue support information necessary for rescuing under the safe situation and can send the rescue support information to the rescue support organization with simple operation when the emergency occurs.

### BRIEF DESCRIPTION OF THE DRAWINGS

Figure 1 is an explanation diagram showing an example of the generation processing of the encryption key and the decryption key in connection with the mobile phone according to a preferred embodiment of the present invention.
Figure 2 is an explanation diagram showing an example of the server processing for registering the data according to a preferred embodiment of the present invention.
Figure 3 is an explanation diagram showing an emergent notification processing of the mobile phone according to a preferred embodiment of the present invention.
Figure 4 is an explanation diagram showing an emergency contact receiving processing of the server device according to a preferred embodiment of the present invention.
Figure 5 is an explanation diagram showing an emergency contact receiving processing of the server device according to a preferred embodiment of the present invention in the case where the mobile phone terminal is changed to one of another type.
Figure 6 is a block diagram showing an information transmission system according to a preferred embodiment of the present invention.
Figure 7 is a block diagram showing a construction of the mobile phone according to the information transmission system.
Figure 8 is a block diagram showing a construction of the server device according to the information transmission system.
Figure 9 is a flowchart showing a procedure of registering the rescue support information according to a preferred embodiment of the present invention.
Figure 10 is a flowchart showing a procedure of processing for transmitting information according to a preferred embodiment of the present invention.
Figure 11 is an explanation diagram showing an example of the rescue support information.
Figure 12 is an explanation diagram showing an example of the procedure for registering the rescue support information.
Figure 13 is an explanation diagram showing an example of the display screen on which the rescue support information is displayed.
Figure 14 is an explanation diagram showing an example of disaster map.
Figure 15A is a diagram showing a situation where the user's identification information is registered as a contingency planning in advance, at a preferred embodiment of the present invention.
Figure 15B is a diagram showing a situation related to the provided information corresponding to the location of emergency and supporting of evacuation according to an emergency occurrence of a preferred embodiment of the present invention.
Figure 16 is a diagram showing a situation where the information are provided from plural user's when an emergency of a preferred embodiment of the present invention occurs.
Figure 17 is a conceptual diagram showing the determination of recovery support plan according to a preferred embodiment of the present invention.
Figure 18 is a diagram showing the inspection service of the medical information such as medical records kept by the medical institution, that is one of the user identification information according to a preferred embodiment of the present invention.
Figure 19 shows an inspection screen of the electronic medical information according to a preferred embodiment of the present invention.
Figure 20 is a diagram showing a procedure for referencing the electronic medical records at an emergency mode according to a preferred embodiment of the present invention.
Figure 21 is a diagram showing the system structure of the electronic medical records unitary management system according to a preferred embodiment of the present invention.
Figure 22 is a diagram showing the utilization state of the user location information recognition system according to a preferred embodiment of the present invention.
Figure 23 is a diagram showing the flow of the information processing of the user location information recognition system according to a preferred embodiment of the present invention.
Figure 24 is a conceptual diagram for explaining the correlation of the information for registering the user identification number (or UTN) (fifteen figures) and FOMA(trademark) card identity number (or UIM) of the mobile phone terminal according to the second basic pattern of the preferred embodiment.
Figure 25 is a conceptual diagram for explaining the correlation of the information for registering the user identification number (or UTN) (fifteen figures) and FOMA(trademark) card identity number (or UIM) of the mobile phone terminal according to the second basic pattern of the preferred embodiment.

### DESCRIPTION OF THE PREFERRED EMBODIMENTS

The preferred embodiment according to the present invention is described with referencing the drawings hereinafter. In the following description, the necessary things for achieving the purpose of the present invention are explained typically, the explanation corresponding to the structures of the present invention is described mainly, and the things to which common technologies can be applied are omitted.

Firstly, the encryption key management device 10 according to the preferred embodiment of the present invention is described.

Figure 1 shows the structure of the encryption key management device 10. The encryption key management device 10 stores the encryption key (it is called 'pseudo encryption key' hereinafter) input and specified by the operator who is the administrator of the encryption key management device 10, the individual or the corporation in advance. Then, the encryption key management device 10 generates the encryption key necessary for the encryption processing (it is called 'real encryption key' hereinafter) using the stored pseudo encryption key whenever the actual encryption processing is executed, and executes the encryption processing using the generated real encryption key.

Concretely, at first, the operator who is the administrator of the encryption key management device 10, the individual or the corporation inputs and specifies the pseudo encryption key PK by performing the input operation of the input unit 50, then, the encryption key management device 10 inputs the pseudo encryption key PK to the real encryption key generation unit 60, the check ID generation unit 70 and the correspondence table generation unit 80 in the pseudo encryption key generation processing unit 20.

Incidentally, in this case, the encryption key management device 10 may generate the pseudo encryption key PK and stores it into the memory unit 100 in advance, select and read out the pseudo encryption key PK from the memory unit 100 based on the input operation of the input unit 50 by the operator, then, provide it to the pseudo encryption key generation processing unit 20.

The real encryption key generation unit 60 generates the real encryption key RK at random by performing the predetermined computation processing of the pseudo encryption key PK using the real encryption key generation function Frk1 when the pseudo encryption key PK is input, and outputs it to the check ID generation unit 70.

The check ID generation unit 70 generates the check ID data CI by performing the predetermined computation processing of the real encryption key RK and the pseudo encryption key PK (for example, the processing of deducting the pseudo encryption key PK from the real encryption key RK) using the check ID generation function Fci when the real encryption key RK and the pseudo encryption key PK are input, and outputs it to the correspondence table generation unit 80. The check ID data CI is used for generating the real encryption key RK using the pseudo encryption key PK in the later processing.

The correspondence table generation unit 80 generates the correspondence table TB correlated to the pseudo encryption key PK and the check ID data CI, when the pseudo encryption key PK and the check ID data CI correlated to the pseudo encryption key PK are input, then the correspondence table generation unit 80 outputs it to the encryption processing unit 90.

Incidentally, when plural pseudo encryption key PK are input and specified, plural check ID data IC are generated corresponding to each pseudo encryption key PK. In this case, the correspondence table generation unit 80 generates the correspondence table TB by correlating each pseudo encryption key PK to each check ID data CI.

The encryption processing unit 90 generates the encrypted correspondence table TB by performing the encryption processing of the correspondence table TB, and stores it into the memory unit 100.

After this, in the case where the changing of the pseudo encryption key stored in the memory unit becomes necessary by some reason such as the operator who is the administrator of the encryption key management unit 10 is changed, the encryption key management unit 10 provides the pseudo encryption key PK according to changing object to the retrieval processing unit 110 when the operator performs the input operation of the input unit 50 for inputting and specifying the pseudo encryption key necessary for changing.

The retrieval processing unit 110 generates the encrypted pseudo encryption key PK by performing the encryption computation processing of the pseudo encryption key PK of the changing object. Then, the retrieval processing unit 110 executes the certification processing by retrieving the encrypted pseudo encryption key PK of the changing object from among the encrypted correspondence table TB stored in the memory unit 100.

In the case the retrieval processing unit 110 cannot retrieve the encrypted pseudo encryption key PK of the changing object from among the encrypted correspondence table TB stored in the memory unit 100, the retrieval processing unit 110 urges the operator to input the pseudo encryption key PK once more by displaying the certification failure information indicating that the certification has failed on the display unit 150.

In contrast, in the case the retrieval processing unit 110 could retrieve the encrypted pseudo encryption key PK of the changing object from among the encrypted correspondence table TB stored in the memory unit 100, the retrieval processing unit 110 urges the operator to input the new pseudo encryption key PK by displaying the certification success information indicating that the certification has succeeded on the display unit 150.

When the operator inputs and specifies the new pseudo encryption key PK by executing the input operation of the input unit 50, the encryption key management unit 10 provides the newly input pseudo encryption key PK to the check ID generation unit 180 and the correspondence table generation unit 190 in the pseudo encryption key changing processing unit 40.

In addition, in the case the certification is succeeded, the retrieval processing unit 110 reads out the encrypted pseudo encryption key PK of the changing object and the encrypted check ID data CI corresponding to the encrypted pseudo encryption key PK from the memory unit 100 and provides them to the decryption processing unit 160 in the pseudo encryption key changing processing unit 40.

The decryption processing unit 160 decrypts the pseudo encryption key PK and the check ID data CI by performing the decryption processing of the encrypted pseudo encryption key PK of the changing object and the encrypted check ID data CI, then, the decryption processing unit 160 outputs them to the real encryption key generation unit 170.

The real encryption key generation unit 170 generates the real encryption key RK by performing the predetermined computation processing of the pseudo encryption key PK and the check ID data CI (for example, the processing of adding the pseudo encryption key PK to check ID data CI) using the real encryption key generation function Frk2 when the pseudo encryption key PK of the changing object and the check ID data CI are input, then, the real encryption key generation unit 170 outputs it to the check ID generation unit 180.

In this connection, the real encryption key generation unit 170 may generate the real encryption key RK using the pseudo encryption key PK input from the input unit 50 by the operator, not using the pseudo encryption key PK read out from the memory unit 100. In this case, the decryption processing unit 160 performs the decryption processing of only the encrypted check ID data CI.

Incidentally, the real encryption key generation unit 170 in the pseudo encryption key changing processing unit 40 generates the same real encryption key RK as the real encryption key RK generated in the real encryption key generation unit 60 in the pseudo encryption key generation processing unit 20.

The check ID generation unit 180 generates the new check ID data CI by performing the predetermined computation processing of the pseudo encryption key PK and the real encryption key RK (for example, the processing of deducting the pseudo encryption key PK from the real encryption key RK) using the check ID generation function Fci when the newly input pseudo encryption key PK and the real encryption key RK are provided, then, the check ID generation unit 180 outputs it to the correspondence table generation unit 190.

As described above, when the pseudo encryption key is changed, the check ID data CI is changed based on the changing of the pseudo encryption key PK by generating the new check ID data CI using the first generated real encryption key RK.

Hereby, the real encryption key generation unit 130 of the data processing unit 30 can continuously generate the same real encryption key RK as the real encryption key RK firstly generated in the real encryption key generation unit 60 in the pseudo encryption key generation processing unit 20 even when the pseudo encryption key PK has been changed. Therefore, the state of which the real encryption key RK is fixed in the encryption key management device 10 can be kept.

The correspondence table generation unit 190 generates the new correspondence table TB in which the pseudo encryption key and the check ID data CI are correlated when the newly input pseudo encryption key PK and the newly generated check ID data CI corresponding to the pseudo encryption key PK are input. Then, the correspondence table generation unit 190 outputs it to the encryption processing unit 200.

The encryption processing unit 200 generates the encrypted correspondence table TB by performing the encryption processing of the newly generated correspondence table TB, then the encryption processing unit 200 stores it into the memory unit 100.

In such state, the encryption key management device 10 provides the pseudo encryption key PK for generating the real encryption key PK necessary for executing the encryption processing of the predetermined data to the retrieval processing unit 110, when the pseudo encryption key PK is input from outside.

The retrieval processing unit 110 generates the encrypted pseudo encryption key PK by performing the encryption processing of the pseudo encryption key PK. Then, the retrieval processing unit 110 retrieves the encrypted pseudo encryption key PK from among the encrypted correspondence table TB stored in the memory unit 100.

In the case the retrieval processing unit 110 could retrieve the input and encrypted pseudo encryption key PK from among the encrypted correspondence table TB stored in the memory unit 100, the retrieval processing unit 110 reads out the encrypted pseudo encryption key PK and the encrypted check ID data CI stored with being correlated to the encrypted pseudo encryption key PK, and provides them to the decryption processing unit 120 in the data processing unit 30.

The decryption processing unit 120 generates the pseudo encryption key PK and the check ID data CI by performing the decryption processing of the encrypted pseudo encryption key PK and the encrypted check ID data CI. Then, the decryption processing unit 120 outputs them to the real encryption key generation unit 130.

Incidentally, in this case, the pseudo encryption key PK and the check ID data CI may be retrieved after the decryption of the encrypted correspondence table TB.

The real encryption key generation unit 130 generates the real encryption key RK by performing the predetermined computation processing of the pseudo encryption key PK and check ID data CI (for example, the processing of adding the pseudo encryption key PK to the check ID data CI) using the real encryption key generation function Frk2 when the pseudo encryption key and the check ID data CI are provided. Then, real encryption key generation unit 130 outputs it to the data encryption processing unit 140.

In this connection, the real encryption key generation unit 130 may generate the real encryption key using the pseudo encryption key PK input from outside, not using the pseudo encryption key PK read out from the memory unit 100. In this case, the decryption processing unit 120 performs the decryption processing only of the encrypted check ID data CI.

Incidentally, the real encryption key generation unit 130 generates the same real encryption key RK as the real encryption key RK generated in the real encryption key generation unit 60 in the pseudo encryption key generation processing unit 20.

The data encryption processing unit 140 performs the predetermined encryption processing of the object data of the encryption using the real encryption key RK. Hereby, the real encryption key RK necessary for performing the encryption processing is not stored in the memory unit 100 but is generated using the pseudo encryption key PK stored in the memory unit 100 whenever the encryption processing is performed. Therefore, even the operator who is the administrator of the encryption key management device 10 cannot know the real encryption key RK.

Figure 2 shows an embodiment of the data processing in the encryption key management device 10 when the pseudo encryption key PK is changed. In Figure 2, the symbol PKb indicates the unchanged pseudo encryption key PK, the symbol TBb indicates the unchanged correspondence table TB, the symbol PKa indicates the changed pseudo encryption key PK and the symbol TBa indicates the changed correspondence table TB.

In such situation, the encryption key management device 10 provides the pseudo encryption key PK to the retrieval processing unit 110 for performing the encryption processing of the predetermined data, when the changed pseudo encryption key is input from outside.

The retrieval processing unit 110 generates the encrypted pseudo encryption key PK by performing the encryption processing of the changed pseudo encryption key PK. Then, the retrieval processing unit 110 retrieves the changed encrypted pseudo encryption key from the encrypted correspondence table TB stored in the memory unit 100.

In this case, the retrieval processing unit 110 can retrieve the changed pseudo encryption key, which is input and encrypted, from the encrypted corresponding table TB stored in the memory unit 100. Next, the retrieval processing unit 110 reads out the encrypted pseudo encryption key PK and the encrypted check ID data CI stored with being correlated to the encrypted pseudo encryption key from the memory unit 100. Then, the retrieval processing unit 110 provides these data to the decryption processing unit 120 in the data processing unit 30.

The decryption processing unit 120 generates the changed pseudo encryption key PK and the changed check ID data CI by performing the decryption processing of the encrypted changed pseudo encryption key PK and the encrypted check ID data CI, and outputs them to the real encryption key generation unit 130.

The real encryption key generation unit 130 generates the same real encryption key RK as the firstly generated real encryption key RK in the real encryption key generation unit 60 in the pseudo encryption key generation processing unit 20 by performing the predetermined computation processing of the pseudo encryption key PK and the check ID data CI (for example, the processing of adding the pseudo encryption key PK to the check ID data CI) using the real encryption key generation function Frk2 when the changed pseudo encryption key PK and the check ID data CI are provided, and outputs it to the data encryption processing unit 140 for making the data encryption processing unit 140 to perform the predetermined encryption processing.

In contrast, when the unchanged pseudo encryption key PK is input from the input unit 50, the retrieval processing unit 110 displays the authentication failure information, which indicates that the unchanged pseudo encryption key PK cannot be retrieved from the encrypted correspondence table TB stored in the memory unit 100, on the display unit 150.

Hereby, an unauthorized access by the person knowing the unchanged pseudo encryption key PK can be prevented, therefore, leak of information can be prevented easily. In addition, the same real encryption key RK as the real encryption key RK necessary for the actual encryption processing can be generated, even if the pseudo encryption key PK is changed, therefore, the effort for management of the encryption key can be reduced because new encryption processing of the data is not necessary.

Figure 3 shows the procedure RT10 of pseudo encryption key generation processing according to the present embodiment. As shown in Figure 3, when the procedure of the pseudo encryption key generation processing RT10 starts, the encryption key management device 10 jumps to the step SP10 and inputs the pseudo encryption key PK based on the operator's input operation of the input unit 50.

According to the step SP20, the pseudo encryption key generation processing unit 20 generates the real encryption key RK based on the pseudo encryption key PK. According to the step SP30, the pseudo encryption key generation processing unit 20 generates the check ID data CI by performing the predetermined computation processing of the pseudo encryption key PK and the real encryption key RK.

According to the step SP40, the pseudo encryption key generation processing unit 20 generates the correspondence table TB by correlating the pseudo encryption key PK with the check ID data CD generated using the pseudo encryption key PK.

According to the step SP50, the pseudo encryption key generation processing unit 20 encrypts the correspondence table TB, then, jumps to the step SP60 and stores the encrypted correspondence table TB into the memory unit 100. In addition, the pseudo encryption key generation processing unit 20 jumps to the step SP70 and completes the procedure RT10 of the pseudo encryption key generation processing.

Figure 4 shows the procedure RT20 of the data processing according to the present embodiment. As shown in Figure 4, the encryption key management device 10 jumps to the step SP100 when the procedure of the pseudo encryption key generation processing RT20 starts, and provides the pseudo encryption key PK to the retrieval processing unit 110 when the pseudo encryption key PK is input from the outside.

According to the step SP110, the retrieval processing unit 110 encrypts the input pseudo encryption key PK. According to the step SP120, the retrieval processing unit 110 retrieve the input encrypted pseudo encryption key PK from the encrypted correspondence table TB stored in the memory unit 100.

When the retrieval processing unit 110 determines that the pseudo encryption key PK can be retrieved at the step SP130, the retrieval processing unit 110 jumps to the step SP140 and reads out the encrypted pseudo encryption key PK and the encrypted check ID data CI stored with being correlated to the encrypted pseudo encryption key PK from the memory unit 100. Next, the retrieval processing unit 110 provides them to the data processing unit 30. Then, the data processing unit 30 decrypts each of the encrypted pseudo encryption key PK and the check ID data CI.

In contrast, when the retrieval processing unit 110 determines that the input and encrypted pseudo encryption key PK cannot be retrieved at the step SP130, the retrieval processing unit 110 returns to the step SP100 and the above described processing are repeated.

According to the step SP150, the data processing unit 30 generates the real encryption key RK by performing the predetermined computation processing of the pseudo encryption key PK and the check ID data CI using the real encryption key generation function Frk2.

According to the step SP160, the data processing unit 30 performs the predetermined encryption processing of the object data of encryption using the real encryption key RK. Then the data processing unit 30 jumps to the step SP170 and the procedure RT20 of the data processing is completed.

Figure 5 shows the procedure RT30 of the pseudo encryption key changing processing according to the present embodiment. As shown in Figure 5, when the procedure of the pseudo encryption key generation processing RT30 starts, the encryption key management device 10 inputs the pseudo encryption key PK of changing object based on the operator's input operation using the input unit 50 at the step SP200.

According to the step SP210, the retrieval processing unit 110 generates the encrypted pseudo encryption key PK by performing the encryption processing of the pseudo encryption key PK of changing object. Then, the retrieval processing unit 110 performs the authentication processing by retrieving the encrypted pseudo encryption key PK of changing object from among the encrypted correspondence table TB stored in the memory unit 100.

When the retrieval processing unit 110 cannot retrieve the input and encrypted pseudo encryption key PK of the changing object and determines the failure of authentication at the step SP220, the retrieval processing unit 110 returns to the step SP200 and repeats the above-described processing.

In contrast, when the retrieval processing unit 110 could retrieve the input and encrypted pseudo encryption key PK of the changing object and determines the success of authentication at the step SP220, the retrieval processing unit 110 jumps to the step SP230 and makes the operator to input the new pseudo encryption key PK.

According to the step SP240, the retrieval processing unit 110 reads out the encrypted pseudo encryption key PK of the changing object and the encrypted check ID data CI stored with being correlated to the encrypted pseudo encryption key PK from the memory unit 100, and provides them to the pseudo encryption key changing processing unit 40.

According to the SP250, the pseudo encryption key changing processing unit 40 decrypts the encrypted pseudo encryption key PK and the check ID data CI of changing object respectively. According to the step SP260, the pseudo encryption key changing processing unit 40 generates the real encryption key RK by performing the predetermined computation processing of the pseudo encryption key PK of the changing object and the check ID data CI using the real encryption key generation function Frk2.

According to the step SP270, the pseudo encryption key changing processing unit 40 generates the new check ID data CI by performing the predetermined computation processing of the new pseudo encryption key PK and real encryption key RK using the check ID generation function Fci.

According to the step SP280, the pseudo encryption key changing processing unit 40 generates the new correspondence table TB by correlating the new pseudo encryption key PK with the new check ID data CI corresponding to the pseudo encryption key PK.

According to the step SP290, the pseudo encryption key changing processing unit 40 encrypts this correspondence table TB. Next, the pseudo encryption key changing processing unit 40 jumps to the following step SP300 and stores the encrypted correspondence table TB into the memory unit 100. Then, the pseudo encryption key changing processing unit 40 jumps to the step SP310 and the pseudo encryption key changing processing procedure RT30 completes.

As described above, the present embodiment can continuously generate the same real encryption key even if the pseudo encryption key PK is changed, thereby, reducing the effort for managing the encryption key. Moreover, the information leakage can be prevented easily by changing the pseudo encryption key PK as necessary.

Incidentally, the above-described embodiment is merely an example, and so the above-described embodiment does not restrict the present invention. For example, the pseudo encryption key can be changed at fixed interval (for example, every day), but not changed when the operator who is the administrator of the encryption key management device 10 is changed.

The above-described embodiment is the case where the real encryption key generation unit 60 is applied as the first real encryption key generation unit, but other various kinds of the first real encryption key generation units, which are constructed to generate the real encryption key RK using the pseudo encryption key PK when the real encryption key RK used for encrypting the data of the encryption object is provided, may be applied.

The above-described embodiment is the case where the check ID generation unit 70 is applied as the first pseudo encryption key correspondence table generation unit, but other various kinds of the first pseudo encryption key correspondence table generation units, which are constructed to generate the check ID data CI as the pseudo encryption key correspondence data correlated to the pseudo encryption key PK using the pseudo encryption key PK and the real encryption key RK, may be applied.

The above-described embodiment is the case where the correspondence table generation unit 80 and the encryption processing unit 90 are applied as the first correspondence table generation unit and the first encryption processing unit, but other various kinds of the first correspondence table generation units and the first encryption processing units, which are constructed to store the pseudo encryption key PK and the check ID data CI corresponding to the pseudo encryption key correspondence data into the memory unit 100, may be applied.

The above-described embodiment is the case where the retrieval processing unit 110 is applied as the first read out unit, but other various kinds of the first read out units, which are constructed to read out the check ID data CI as the pseudo encryption key correspondence data correlated to the pseudo encryption key PK of changing object, may be applied.

The above-described embodiment is the case where the decryption processing unit 160 is applied as the first decryption unit , but other various kinds of the first decryption units, which are constructed to read out and decrypt the check ID data CI as the pseudo encryption key correspondence data correlated to the pseudo encryption key PK of changing object and output it, may be applied.

The above-described embodiment is the case where the real encryption key generation unit 170 is applied as the second real encryption key generation unit, but other various kinds of the second real encryption key generation units, which are constructed to generate the real encryption key RK using the pseudo encryption key PK of the changing object and the check ID data CI as the pseudo encryption key correspondence data, may be applied.

The above-described embodiment is the case where the check ID generation unit 180 is applied as the second pseudo encryption key correspondence data generation unit, but other various kinds of the second pseudo encryption key correspondence data generation units, which are constructed to change the pseudo encryption key correspondence data by generating the check ID data CI as the pseudo encryption key correspondence data using the changed pseudo encryption key PK and real encryption key RK when the pseudo encryption key PK is changed, may be applied.

The above-described embodiment is the case where the correspondence table generation unit 190 and the encryption processing unit 200 are applied as the second correspondence table generation unit and the second encryption processing unit, but other various kinds of the second correspondence table generation units and the second encryption processing units, which are constructed to store the changed pseudo encryption key PK and the check ID data CI as the pseudo encryption key correspondence data into the memory unit 100 with correlating each other, may be applied.

The above-described embodiment is the case where the retrieval processing unit 110 is applied as the second read out unit, but other various kinds of the second read out units, which are constructed to read out at least the check ID data CI as the pseudo encryption key correspondence data correlated to the pseudo encryption key PK of the reading out object from the memory unit 100 when the command for encrypting the data of encryption object is requested, may be applied.

The above-described embodiment is the case where the decryption processing unit 120 is applied as the second decryption unit, but other various kinds of the second decryption units, which are constructed to decrypt and output at least the check ID data CI as the pseudo encryption key correspondence data correlated to the pseudo encryption key PK of the reading out object from the memory unit 100, can be applied.

The above-described embodiment is the case where the real encryption key generation unit 130 is applied as the third real encryption key generation unit, but other various kinds of the third real encryption key generation units, which are constructed to generate the real encryption key RK using the pseudo encryption key PK of the reading out object and the check ID data CI as the pseudo encryption key correspondence data and outputs it, may be applied.

The above-described embodiment is the case where the data encryption processing unit 140 is applied as the data encryption processing unit, but other various kinds of the data encryption processing units, which are constructed to perform the predetermined encryption processing of the encryption object data using the real encryption key generated by the third real encryption key generation unit, may be applied.

Next, the information transmission system 10-S according to a preferred embodiment of the present invention is described.

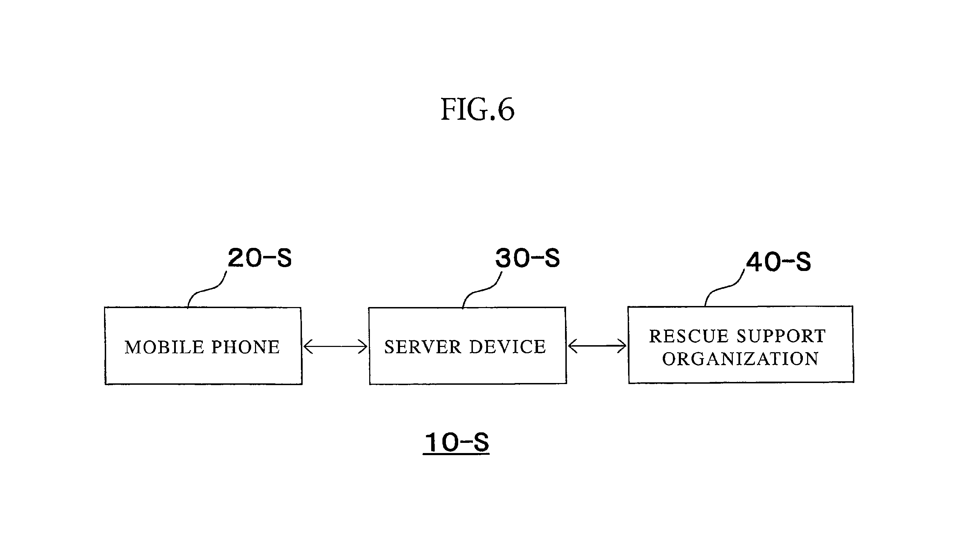

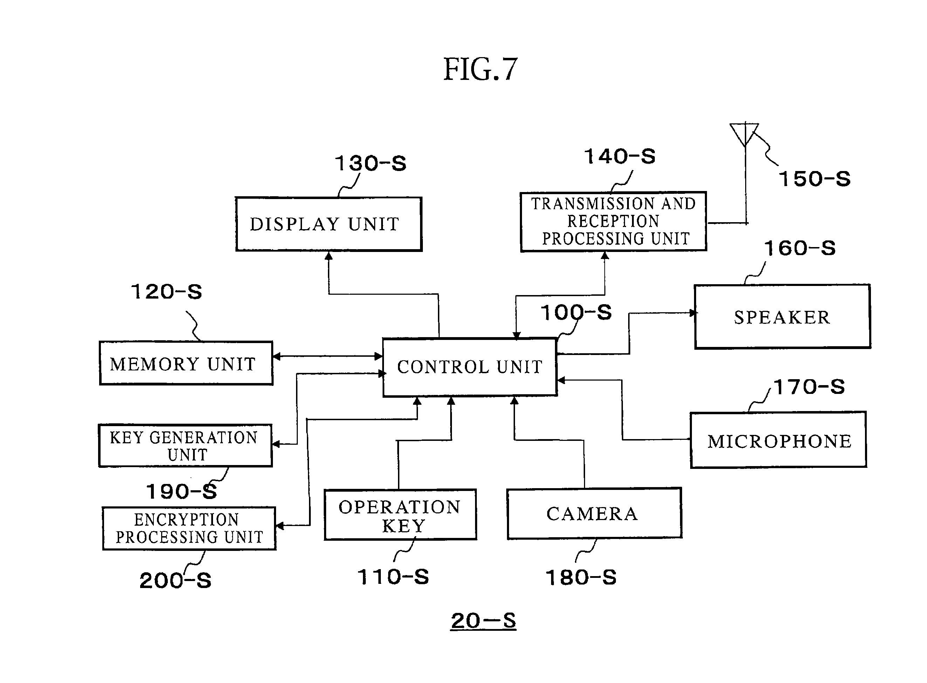

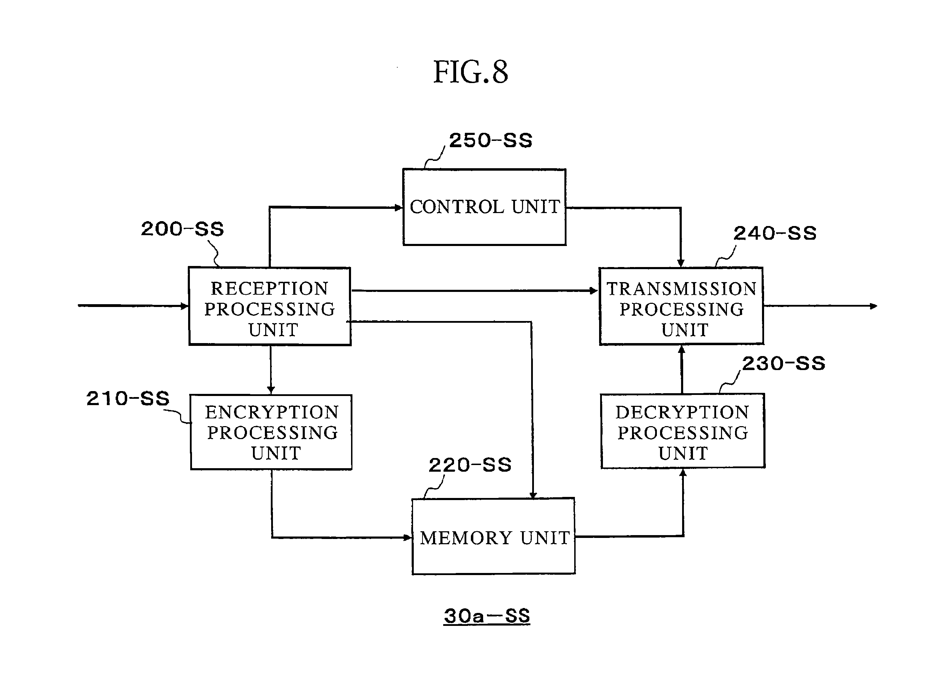

Figure 6 shows the structure of the information transmission system 10-S according to an embodiment of the present invention. The information transmission system 10-S is the system that realize the rescue support service for supporting the rescue of the user when the unforeseen circumstance occurs to the contracting user, and comprises a mobile phone 20-S and a server device 30-S. Figure 7 shows the composition of the circuit of the mobile phone 20-S and figure 8 shows the composition of the circuit of the server 30-S.

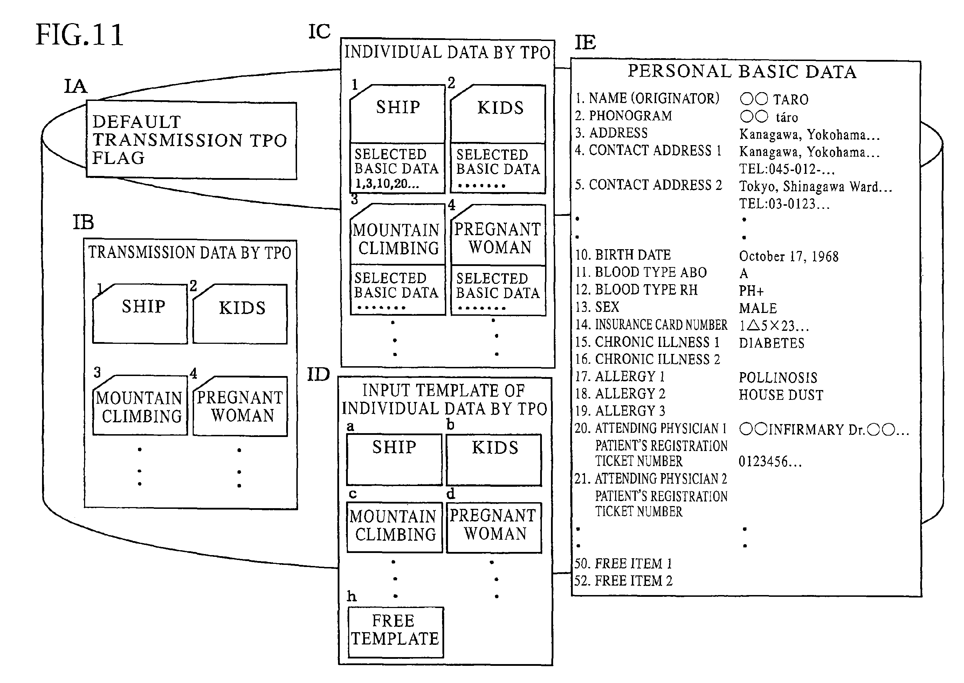

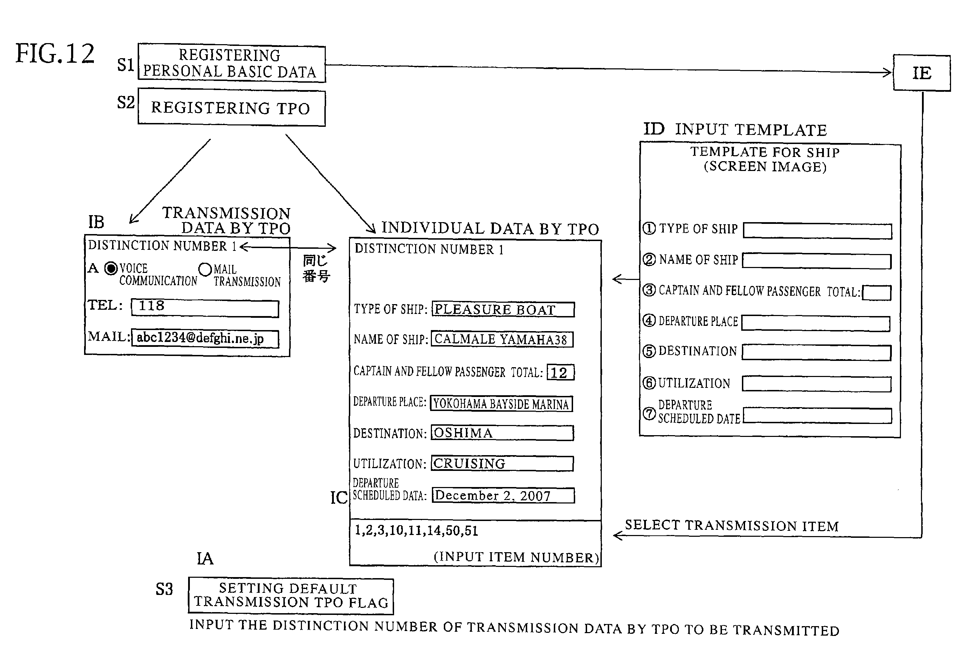

According to the present embodiment, the user previously inputs the rescue support information, which is necessary for rescue in a state of emergency, by operating the operation key 110-S as the operation unit of the mobile phone 20-S. Figure 11 shows an example of the rescue support information containing the personal basic data IE and figure 12 shows an example of the procedure when, for example, the rescue support information for ship is registered to the server device 30-S.

The personal basic data registration S1 of figure 12 indicates that the terminal device 20-S is connected with the server device 30-S via the network and the user inputs the personal basic data IE containing, for example, the name, address, physical information and so on (i.e. user identification information) using the operation key 110-S based on the predetermined input format of the display unit 130-S.

The TPO registration S2 of the figure 12 indicates that the terminal device 20-S is connected with the server device 30-S via the network and the user inputs the transmission data IB classified by the TPO as the transmission destination information containing the information related to the transmission destination such as the telephone number and transmission method of rescue support organization 40S, using the operation key 110-S based on the predetermined input format of the display unit 130-S.

Moreover, the TPO registration S2 of the figure 12 indicates that the peculiar data IC classified by the TPO as the transmission source information containing the information related to the transmission source using the operation key 110-S based on the input peculiar template ID classified by the TPO. The user's desired data can be selected and specified from among the personal basic data IE input in advance. Incidentally, the inputting to the input template ID fixed according to the TPO may be omitted as necessary.

Incidentally, the transmission data IB classified by the TPO and the peculiar data IC classified by the TPO are generated with assigning the same distinction number to the same behavioral pattern and stored into the memory unit 220-S. Hereby, the transmission data IB classified by the TPO and the peculiar data IC classified by the TPO are correlated each other according to the behavioral pattern.

Incidentally, the user can set the decryption key and encryption key such as the passwords, together when inputting the rescue support information using the operation key 110-S. The control unit 100-S stores the decryption key to the memory unit 120-S as the terminal device memory unit when the decryption key and the encryption key are set. The decryption key is read out from the memory unit 120-S when the rescue support information composed of the transmission data IB classified by the TPO (i.e. transmission destination information) and the peculiar data IC classified by the TPO (transmission source information) are stored, and these are output to the transmission processing unit 140-S.

The transmission and receiving processing unit 140-S generates a transmission signal by performing the modulation processing of the decryption key, and transmits it using antenna 150-S. Incidentally, the control unit 100-S deletes the rescue support information stored in the memory unit 120-S as necessary after transmitting the rescue support information when a volatile memory is used as memory unit 120-S.

The receiving processing unit 200-S of the server device 30-S acquires the encryption key by performing the demodulation processing of the received signal when receiving the transmission signal transmitted from the mobile phone 20-S, and outputs it to the encryption processing unit 210-S. The encryption processing unit 210-S as the encryption unit encrypts the rescue support information using the encryption key and stores the encrypted rescue support information to the memory unit 220-S as the server device memory unit.

Thus, the terminal device 20-S is connected with the server device 30-S via the network, the predetermined information is input using the display unit 130-S and the encryption key is transmitted from the mobile phone 20-S to the server device 30-S one by one every time the user signs on for the rescue support service realized by the information transmission system 10-S. Hereby, the server device 30-S stores the encrypted rescue support information and manages them by the user.

In such situation, the user previously sets and inputs the default transmission TPO flag IA as the behavioral pattern corresponding to the planned behavior by operating the operation key 110-S when the user performs the specified behavior such as the going out (see Figure 12 (S3)). Concretely, the identification number corresponding to the planned behavior contained in the transmission data IB classified by the TPO and the peculiar template IC classified by the TPO is input and set.

The control unit 100-S transmits the input behavioral pattern information to the server device 30-S via the transmission and receiving processing unit 140-S and the antenna 150-S. The receiving processing unit 200-S of the server device 30-S stores the behavioral pattern information into the memory unit 220-S with correlating the behavioral pattern information with the rescue support information of the user owning the mobile phone 20-S of the transmission.

After that, the user notifies the occurrence of emergency to the control unit 100-S by pushing down the exclusive button as the transmission command button located in the operation key 110-S and makes the mobile phone 20-S to change into an emergency mode, when the unforeseen circumstance such as an accident or a crime, occurs under the situation where the user is performing the behavior corresponding to the set behavioral pattern. Incidentally, in this case, the user may push the button previously selected from the operation key 110-S long time.

In this case, the control unit 100-S makes the mobile phone 20-S to change into the emergency mode by controlling the executions of each units, even if other operations such as calling or mail are executed. However, the control unit 100-S can realize the inherent functions of the mobile phone 20-S after switching over to the emergency mode.

When the occurrence of the emergency is notified, the control unit 100-S generates the transmission command for making the server device 30-S to transmit the rescue support information to the rescue support organization 40-S. In addition, the control unit reads out the user identification information, which is the identification information of the user owning the mobile phone 20-S, and the decryption key from the memory unit 120-S. Furthermore, the control unit 100-S generates the location information of the mobile phone 20-S by receiving the electromagnetic wave sent from the GPS satellite.

Then, the control unit 100-S transmits the transmission command, the user identification information, the decryption key and the location information to the server device 30-S via the transmission and receiving processing device 140-S as the terminal device transmission unit and the antenna 150-S. Incidentally, after that, the control unit 100-S generates at least the location information from among one of the transmission command, the user identification information, the decryption key and the location information at the predetermined time interval and transmits them to the server device 30-S. Hereby, the location of the user can be specified and the rescue operation can be executed smoothly even if the user owning the mobile phone 20-S moves.

The control unit 100-S invalidates the operation of shutting down the power supply while displaying the screen corresponding to the shutting down of the power supply, and continuously transmits at least the location information to the server device 30-S.

Incidentally, the control unit 100-S can be constituted to acquire the image information such as still image, moving image and so on, by starting the camera 180-S and transmits the image information to the server device 30-S after switching over to the emergency mode. Furthermore, the control unit 100-S can be constituted to transmit the voice information input by the microphone 170-S to the server device 30-S.

In addition, the control unit 100-S can perform various kinds of action such as processing for taking pictures, processing for accepting incoming calls and so on, without outputting sound or voice from the speaker 160-S after switching over to the emergency mode, because the user may be in the situation encounter in a crime.

When receiving the transmission command, the user identification information, the decryption key and the location information, the receiving processing unit 200-S of the server device 30-S outputs the user identification information among them to the memory unit 220-S, outputs the decryption key among them to the processing unit 230-S and outputs the location information among them to the transmission processing unit 240-S.

The memory unit 220-S retrieves the transmission data IB classified by the TPO and the peculiar data IC classified by the TPO of the user based on the user identification information. Furthermore, the memory unit 220-S retrieves the transmission data IB classified by the TPO and the peculiar data IC classified by the TPO corresponding to the preset default transmission TPO flag IA from among the retrieved transmission data IB classified by the TPO and the retrieved peculiar data IC classified by the TPO and read out them. Then, the memory unit 220-S outputs the read out transmission data IB and the read out peculiar data IC to the decryption processing unit 230-S.

The decryption processing unit 230-S as the decryption unit decrypts the transmission data IB classified by the TPO and the peculiar data IC classified by the TPO using the decryption key and outputs the decrypted transmission data IB classified by the TPO and the decrypted peculiar data IC classified by the TPO to the transmission processing unit 240-S.

The transmission processing unit 240-S as the server device transmission unit transmits the peculiar data IC classified by the TPO and the location information to the rescue support organization 40-S which is the transmission destination specified by the transmission data IB classified by the TPO using the transmission method specified by the transmission data ID classified by TPO. For example, the peculiar data IC classified by the TPO and the location information are transmitted to the rescue support organization 40-S such as the fire station, the police station, the coast guard, the private security service and so on, using the telephone or the electronic-mail via the network. The rescue support organization 40-S may construct the information transmission system containing the server device 30-S.

Incidentally, the transmission processing unit 240-S can be constructed to transmit the peculiar data IC classified by the TPO and the location information to the display unit not shown in figures, and to display the picture corresponding to the peculiar data IC classified by the TPO and the location information on the display unit. In such case, the operator can confirm the screen of the display unit and check whether the transmission command is a misinformation before transmitting the peculiar data IC classified by the TPO and the location information to the rescue support organization 40-S. Hereby, it can be prevented to transmit the misinformation to the rescue support organization 40-S.

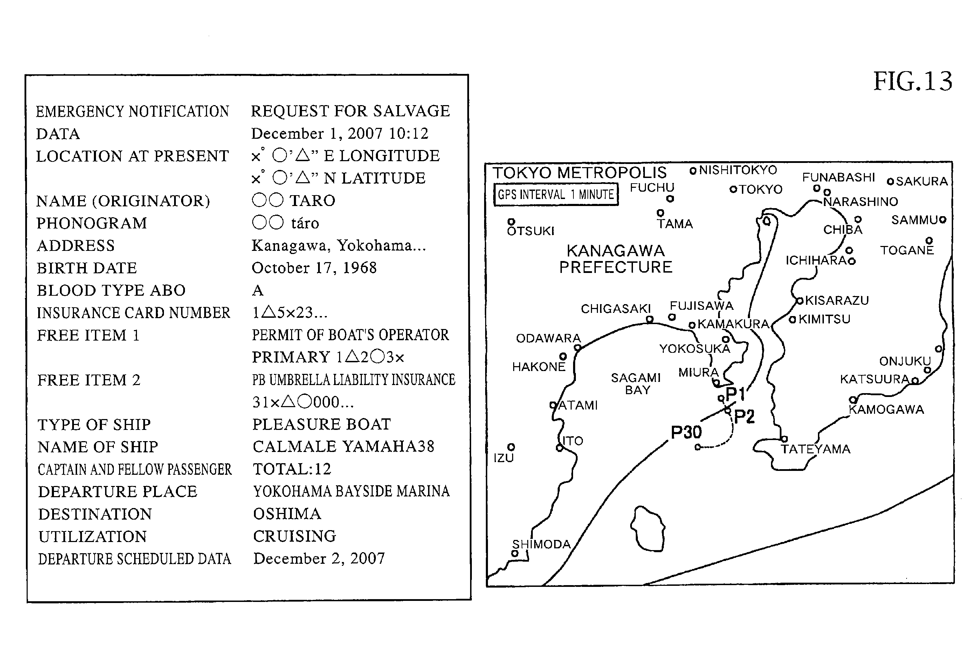

Figure 13 shows an example of the display screen when the shipping (identification number is '1') is set as the default transmission TPO flag IA. As shown in Figure 13, the movement of the user can be displayed continuously by displaying the user's location information (P1 to P30) transmitted at the predetermined time interval on the map.

After that, the rescuer of the rescue support organization rushes to the scene and executes the rescue operation. Then, the rescue support organization 40-S transmits the transmission cancellation command to the server device 30-S when the rescue operation is completed. The receiving processing unit 200-S of the server device 30-S cancels the emergency mode by stopping the transmission of the transmission command using the emergency mode cancellation function for canceling the emergency mode of the control unit 250-S when receiving the transmission cancellation command. Next, the transmission processing unit 240-S transmits the transmission cancellation command to the mobile phone 20-S. The mobile phone 20-S receives the transmission cancellation command using the antenna 150-S and notifies it to the control unit 100-S through the transmission and receiving processing unit 140-S. The control unit 100-S cancels the emergency mode and stops the transmission of the location information when the transmission cancellation command is notified.

Moreover, the mobile phone 20-S can stop the transmission of the transmission command and/or the location information by the predetermined input operation to the operation unit 110-S, furthermore, can stop the generation or the transmission of the location information based on the certification of the user using the analysis result of the control unit 100-S in connection with the living body (including the physical information of living body such as the vocal codes, the fingerprint, the pulsation, eyeball and so on).

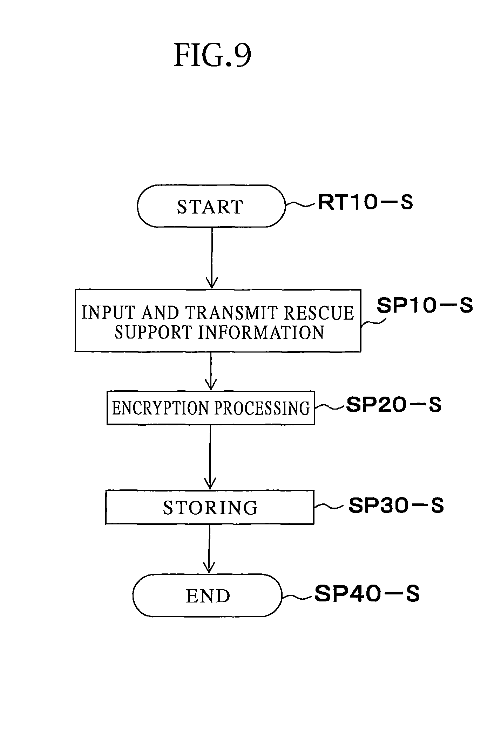

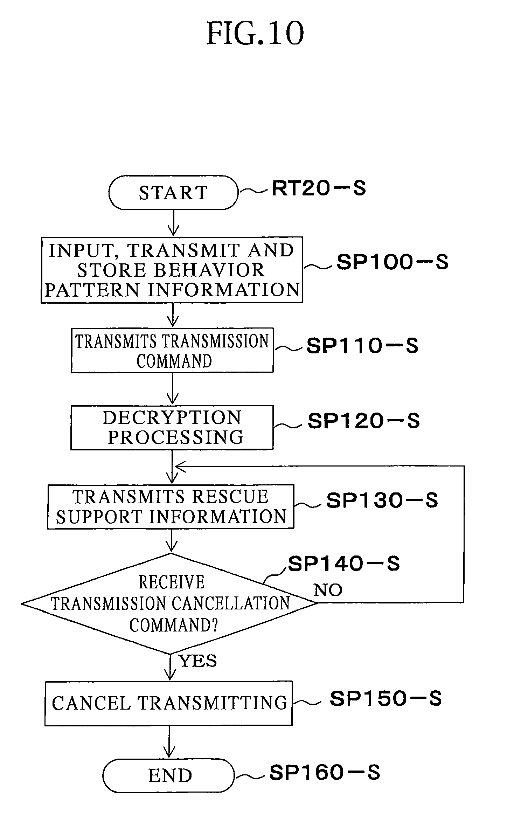

Hereinafter, the procedure for the rescue support information registration processing and the rescue support information transmission processing are described with referencing Figure 9 and Figure 10. This procedure of the processing is the embodiment when the procedure of the key management and encryption of the object data according to the key management device shown in Figure 1 to 5 are applied to the information transmission system, and so the description is simple and practical.

Figure 9 shows the rescue support information registration processing procedure RT10-S according to the present embodiment.

As shown in Figure 9, the control unit 100-S of the mobile phone 20-S starts the rescue support information registration processing procedure RT10-S when the user performs the input operation of the rescue support information using the operation key 110-S. Then, the control unit 100-S of the mobile phone 20-S transmits the input rescue support information to the server device 30-S via the transmission and receiving processing unit 140-S and the antenna 150-S.

According to the step SP20-S, the rescue support information is provided to the encryption processing unit 210-S in the server device 30-S through the receiving processing unit 20-S. Next, the encryption processing unit 210-S jumps to the step SP30-S and stores the encrypted rescue support information into the memory unit 220-S. Then, the encryption processing unit 210-S jumps to the step SP40-S and completes the rescue support information registration processing procedure RT10-S.

Figure 10 shows the information transmission processing procedure RT20-S according to the present embodiment. As shown in Figure 10, the control unit 100-S of the mobile phone 20-S starts the information transmission processing procedure RT20-S when the user performs the input operation of the behavioral pattern information using the operation key 110-S. Then, the control unit 100-S of the mobile phone 20-S transmits the input behavioral pattern information to the server device 30-S via the transmission and receiving processing unit 140-S and the antenna 150-S. The server device 30-S receives the behavioral pattern information using the receiving processing unit 200-S and stores it into the memory unit 220-S.

According to the step SP110-S, the control unit 100-S of the mobile phone 20-S transmits the transmission command, the user identification information, the decryption key and the location information to the server device 30-S via the transmission and receiving processing unit 140-S and the antenna 150-S when the occurrence of the emergency is notified by the user's pushing-down of the exclusive button in the operation key 110-S.

According to the step SP120-S, the server device 30-S reads out the rescue support information corresponding to the provided user identification information from the memory unit 220-S, and decrypts the read out rescue support information using the decryption processing unit 230-S.

According to the step SP130-S, the transmission processing unit 240-S in the server device 30-S transmits the rescue support information to the rescue support organization 40-S. According to the step SP140-S, the server device 30-S receives the transmission cancellation command transmitted from the rescue support organization 40-S when the rescue operation by the rescue support organization 40-S is completed. Then, the process jumps to the step SP150-S and transmission of the rescue support information is stopped when the transmission cancellation command is notified to the transmission processing unit 240-S. Then, the process jumps to the step SP160-S and the server device 30-S completes the information transmission processing procedure RT20-S.

In contrast, when the server device 30-S is decided not to receive the transmission cancellation command at the step SP140-S, the server device 30-S returns to the step SP130-S and repeats the transmitting of the rescue support information until receiving the transmission cancellation command.

As described above, the present embodiment can store and manage the rescue support information under the safe condition by storing the decryption key necessary for decrypting the rescue support information, which is stored in the memory unit 220-S in the server device 30-S, into the memory unit 120-S in the mobile phone 20-S and not into the server device 30-S. Moreover, the present embodiment can transmit the rescue support information to the rescue support organization only by a simple operation, that is, user's pushing-down of the exclusive button. Hereby, the information transmission system with higher rescue rate can be realized.

In addition, the location information can be transmitted to the server device 30-S at the predetermined time interval, so the present embodiment can specify and chase the user's location even if the user owing the mobile phone 20-S moves, and thereby the success rate of rescue becomes higher.

Moreover, the user previously stores the behavioral pattern information corresponding to the planned behavior into the memory unit 220-S in the server device 30-S when the user plans to execute the specified behavior, and so the present embodiment can transmit the rescue support information suitable for the user's behavior to the rescue support organization 40-S.

### (Example 1)

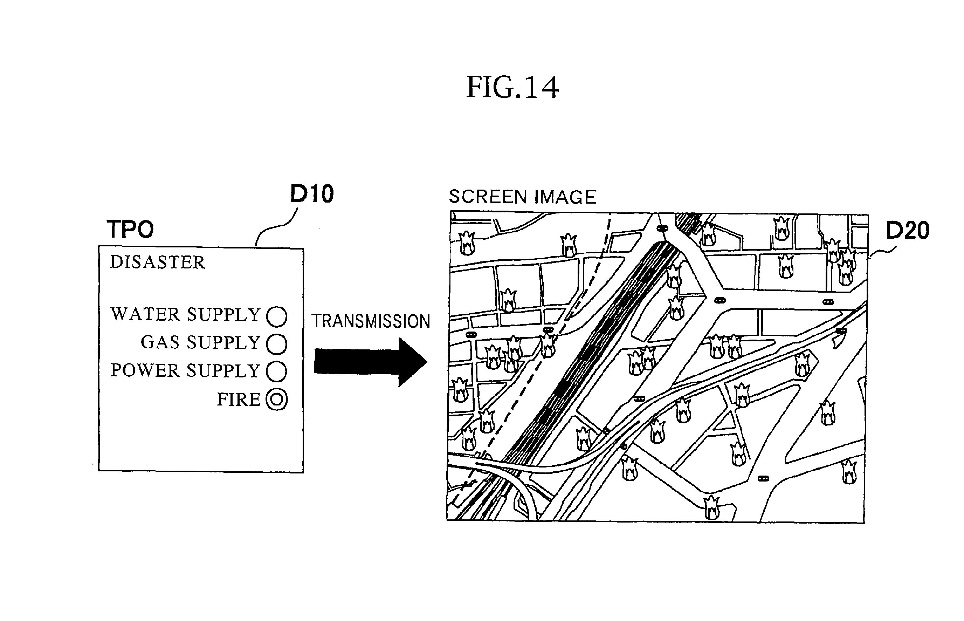

Incidentally, the above-described embodiment is only an example and does not restrict the present invention. For example, as shown in Figure 14, the control unit 100-S in the mobile phone 20-S makes the user to select the damage information such as the kind of the disaster, the kind of the damaged lifeline and so on by displaying the TPO selection screen D10 on the display unit 130-S based on the user's operation of the operation key 110-S. Then, the control unit 100-S in the mobile phone 20-S transmits the selected damage information to the rescue support organization 40-S such as autonomy and so on through the server device 30-S. Hereby, the disaster map such as the map indicating the situation of disaster occurrence etc. can be made out and the detailed rescue support plan can be determined.

The determination of rescue support plan is described in detail, hereinafter.

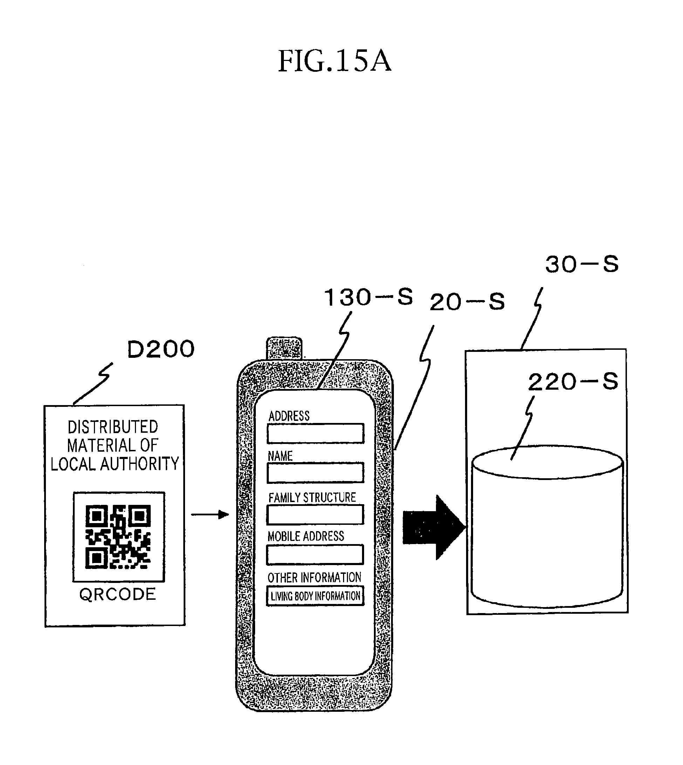

Figure 15A shows the situation when the user's peculiar information is previously registered for the disaster preparedness according to an embodiment of the present invention. As shown in Figure 15A, the user acquires the disaster preparedness advance registration format provided by the local authority using the QR code D200 or other function of the mobile phone 20-S, for example. Then, the user's peculiar information (the address, the name, the family structure, the electronic-mail address of the mobile phone and physical information and other input item are shown in the Figure 15A, but the input items are not limited to these items) are input. After that, the user makes the memory unit 220-S in the server device 30-S to store the information using the encryption key peculiar to the user by operating the mobile phone 20-S.

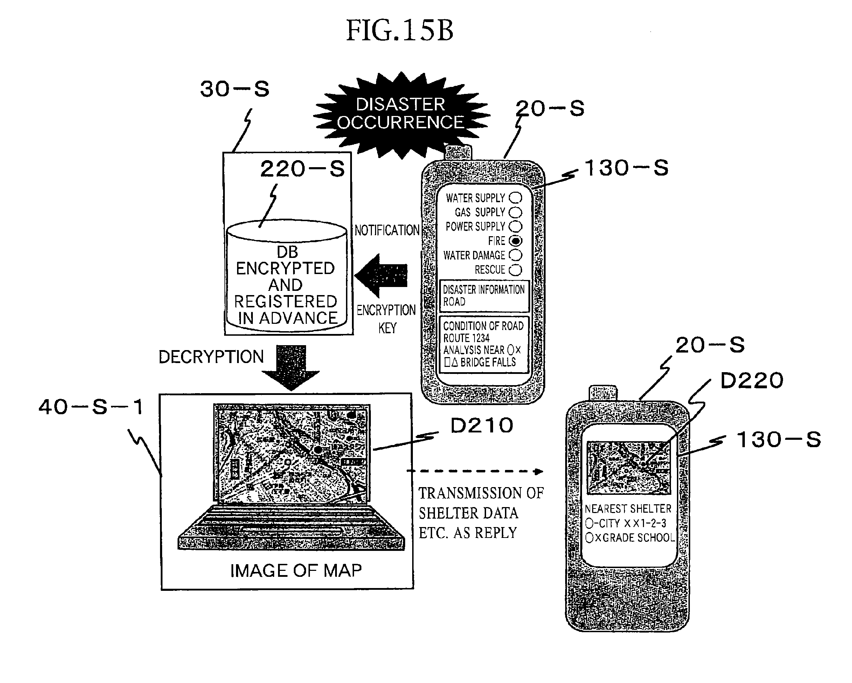

Figure 15B shows the situation for providing information about the disaster occurrence location and the support for evacuation according to an embodiment of the present invention. As shown in Figure 15B, when the disaster occurs, the user performs the predetermined key-inputting-operation using the operation key 110-S, and so the informing picture for disaster occurrence is displayed on the display unit 130-S (or the mechanism for accessing the website for supplying the information can be employed). After displaying such information, the user can select the occurred disaster (the water supply, the gas supply, the electricity supply, the fire and the flood are listed as the selection items, the selection items are not limited to these items). In addition, the user requiring the rescue can select the item of rescue. Furthermore, the detailed information related to the predetermined disaster can be supplied (for example, the detailed information is desirable to be supplied based on the common format for disasters, the peculiar format by each disaster or the free format). Incidentally, figure 15B shows the case where the disaster is the fire and the disaster information is the road,and the condition of the road is provided.

As soon as the operation completes, the receiving processing unit 200-S in the server device 30-S receives the notification (i.e. transmission command) and the decryption key based on the predetermined key-inputting-operation of the operation key 110-S. Next, the user's peculiar information stored into the memory unit 220-S is decrypted using the decryption key and transmitted to the local authority through the transmission processing unit 230-S with the above described information contents. After the transmission, the location informed by the user is pointed on the map displayed on the screen of the information device of the local authority 40-S-1. Additionally, in the case the mobile phone 20-S comprises the GPS function, the information of the user's location can be pointed. Furthermore, the address previously registered by the user can be pointed when the user selects the item of the rescue. The local authority can transmit the suitable information based on these information and the user can confirm the information using the display unit 130-S (Figure 15B shows the case where the evacuation center data is transmitted as the response and received by the display unit 130 as the map information and the text information, but the present invention is not limited to this example).

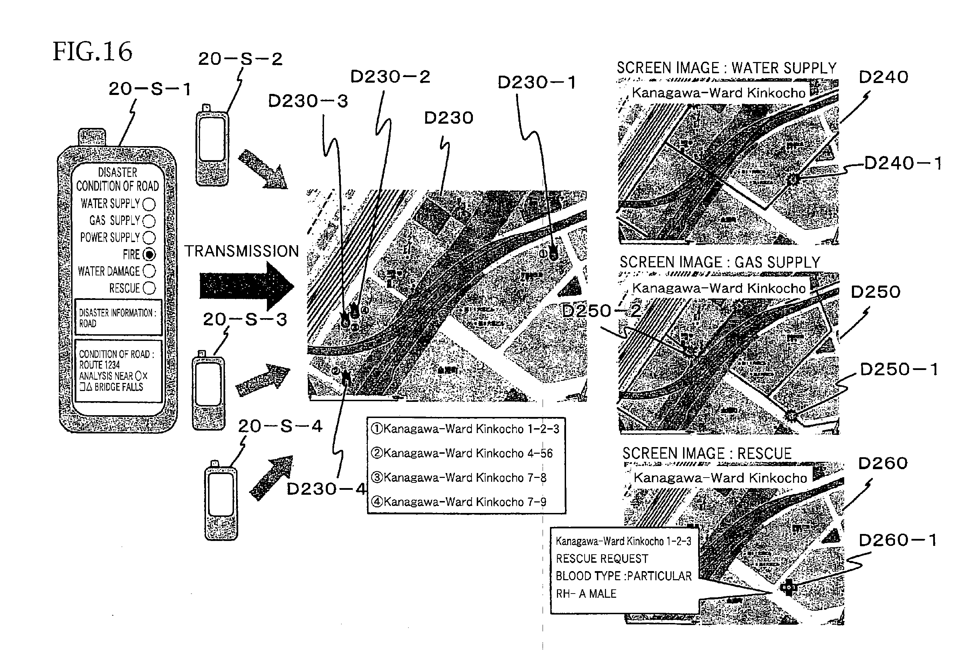

Figure 16 shows the situation when the plural users supply the information about the disaster occurrence according to an embodiment of the present invention. As shown in the Figure 16, according to the above described procedure, the mobile phone 20-S-1, 20-S-2, 20-S-3 and 20-S-4 owned by each user inform the disaster occurrence, then, the disasters detected by the provided information are pointed on the map displayed on the screen D230 corresponding to the information device of the local authority 40-S as the point D230-1, D230-2, D230-3 and D230-4. Moreover, when the water outage is detected by the provided information, the suspended pint D240-1 is displayed with the route of water supply pipe as shown on the screen D240. When the suspension of the gas supply is detected by the provided information, the suspended point D250-1 and D250-2 are displayed with the route of gas supply pipe as shown on the screen D250. When the user selects the item of the rescue, the address D260-1 previously registered by the user can be pointed as shown on screen D260, moreover, the location information of the user can be pointed if the mobile phone has the GPS function. Therefore, the speedy and reliable rescue can be realized.

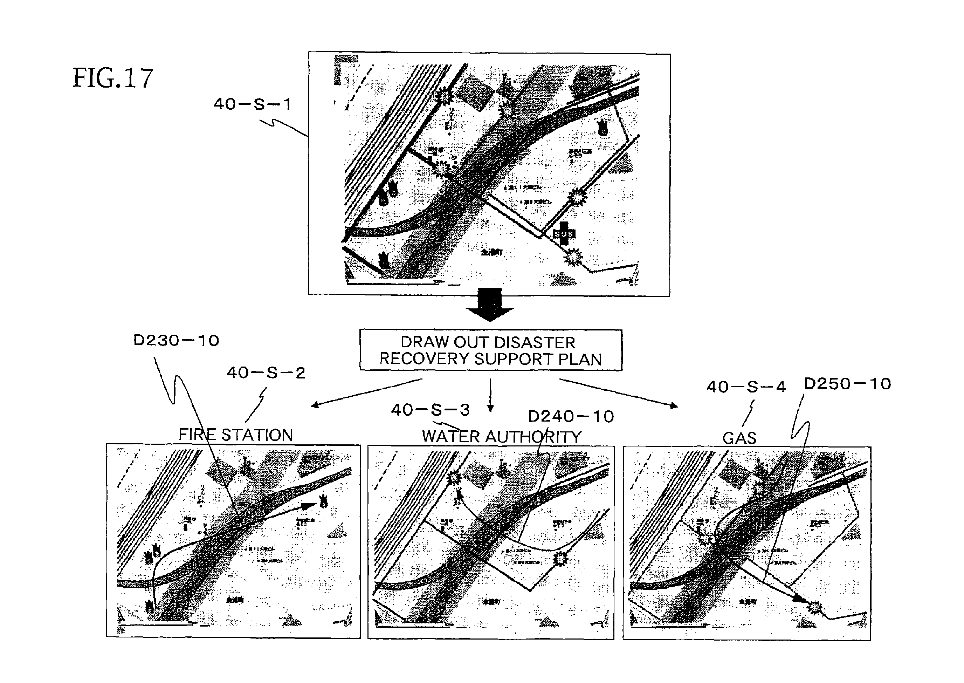

Figure 17 is the conceptual diagram corresponding to the determination of the plan for supporting the recovery against the disaster occurrence according to an embodiment of the present invention. As shown in Figure 17, the disaster location and the rescue requested location detected by the user's present address information are pointed on the map displayed on the screen of the information device of the local authority 40-S-1, and the plan for supporting the recovery is made based on these information. The local authority 40-S-1 can use the system containing the Geographic Information System (hereinafter, the Geographic Information System is called 'GIS' ) and the information of lifeline such as piping etc.. Therefore, as an example of the fire, the subsidence rout D230-10 suitable for the fire station 40-S-2 can be instructed and confirmed on the screen of the information device of the fire station 40-S-2. Moreover, as an example of the water outage, the water supply rout D240-10 suitable for the water authority 40-S-3 can be instructed and confirmed on the screen of the information device of the water authority 40-S-3. Furthermore, as an example of the explosion of the gas piping, the recovery rout D250-10 suitable for the gas station 40-S-4 can be instructed and confirmed on the screen of the information device of the gas station 40-S-4. Hereby, the management of the recovery support plans can be centralized, so the speedy and reliable rescue can be realized.

### (Example 2)

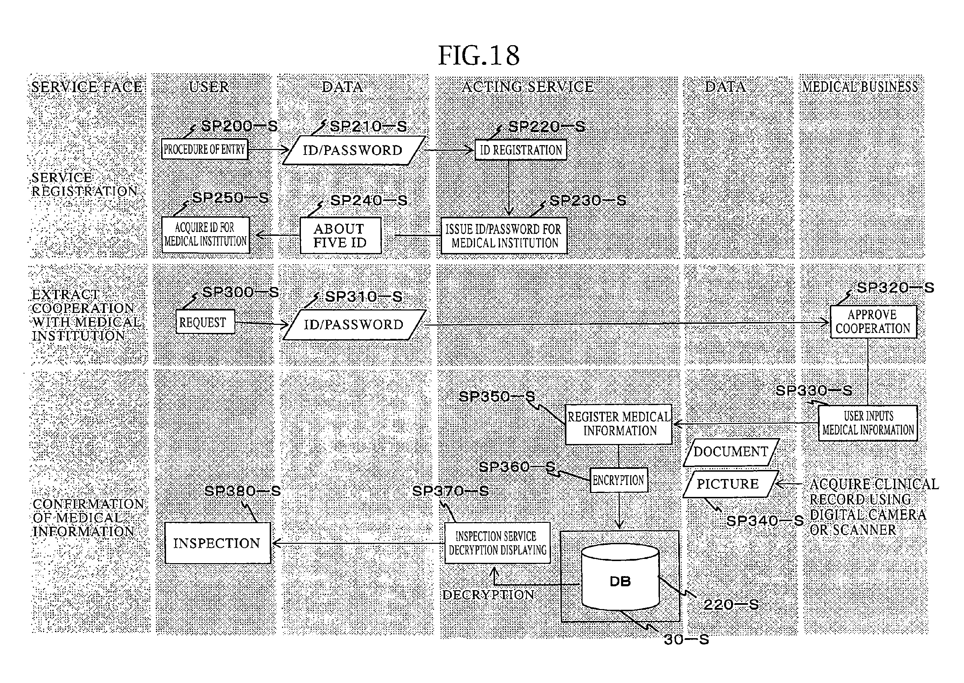

As shown in Figure 18, the medical record information is kept by the medical institution can be used as the input rescue support information in the rescue support information registration processing procedure RT10-S. Figure 18 shows the inspection service of the medical information, which are one of the user identification information, such as medical record kept by medical institution. Firstly, the user performs the entry procedure for self-managing the predetermined information corresponding to the medical record using the memory unit 220-S shown in Figure 3 (see step SP200-S), sets the predetermined personal information, the ID or the password (see step SP210-S) and performs the registration processing (see step 220-S). Hereby, the receiving processing unit 200-S in the server device 30-S issues the IDs or the passwords for the medical institutions, numbers of which are corresponding to the numbers of the self-managements desired by the user (see step SP230-S and SP240-S) and the transmission processing unit 240-S transmits them to the user (see step SP250-S).

Next, the user performs the commission procedure to the medical institution issuing the IDs or the passwords (see step SP300-S) and transmits the IDs or the passwords (see step SP310-S). After that, the medical institution gains the approval and cooperation for the self-management of the medical record and the information disclosure corresponding to the unforeseen circumstances (see step SP320-S), and registers the personal information of the user (see step SP330-S). In the registration processing, the medical information such as the medical record is photographed by digital camera or scanned, or, the record contents of the medical record are input to the information terminal (see step SP340-S). These electrical medical information are registered with being correlated to the user ID or the password (see step SP350-S), encrypted using the encryption key (see step SP360-S) and stored into the memory unit 220-S in the server device 30-S. In the case the ID or the password is the encryption key, the information can be encrypted by the encryption key and stored into the memory unit 220.

The user or the medical institution decrypts and displays the medical information (see step SP370-S), then, the user can inspect the electrical medical information (see step SP380-S).

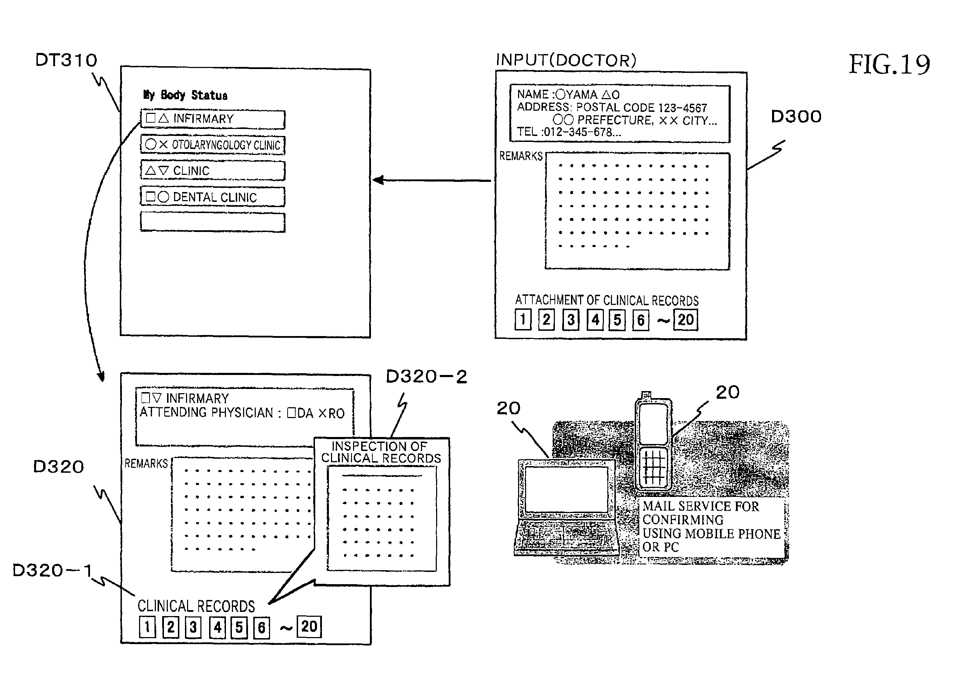

Figure 19 shows the inspection screen of the electrical medical information according to an embodiment of the present invention. As shown in Figure 19, the doctor, nurse or other participant of the medical institution records the predetermined personal information of the user and the remarks of the doctor such as D300, and registers them with attaching the medical information such as the medical record related to the user. The user or the predetermined rescue support organization can acquire the website information (for example, URL etc.) for decrypting various kinds of the managed information and inspecting the medical information using the terminal device 20-S, and can access to the medical information supply website D310. Hereby, the screen D320 for inspecting the various kinds of the information managed by the medical institution (for example, name of the hospital, name of the attending doctor, opinion of the doctor and the medical record information attached) can be displayed by selecting the medical institution listed on the website. Especially, the medical record information can be displayed on the screen D320-2 by selecting the electronic medical record D320-1, because the medical records are attached with being converted to the electronics data using the digital camera or scanning. The inspection of the electronic medical records may be realized by directly downloading from the memory unit 220-S storing them.

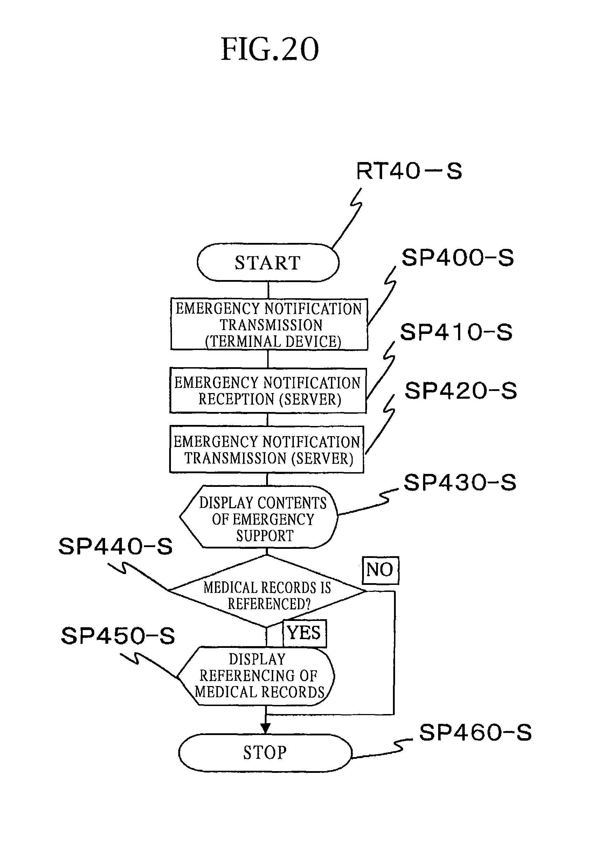

Figure 20 is the diagram showing the electronic medical record reference procedure of the emergency mode according to an embodiment of the present invention. As shown in Figure 20, the procedure for which the predetermined support organization references the electronic medical record starts when the emergency mode is notified. Concretely, the user's terminal device 20-S shown in Figure 6 transmits the transmission command indicating the occurrence of the emergency and other signals (see step SP400-S), and the server device 30-S receives the transmission command etc. (see step SP410-S). Then, the server device 30-S transmits the transmission command etc. to the predetermined rescue support organization 40-S (see step SP420-S). In this processing, the rescue support organization 40-S displays the emergency support contents disclosed by the procedure of the rescue support information transmission processing shown in Figure 10 (see step SP430-S), and so the rescue support organization 40-S can select whether to refer to the contents of the electronic medical record or not. When referencing the contents of the electronic medical record, the electronic medical record can be referenced using the inspection screen shown in Figure 19 (see step SP450-S). In contrast, when not referencing the contents of the electronic medical record, the procedure is completed without any processing (see step SP460-S).

### (Example 3)

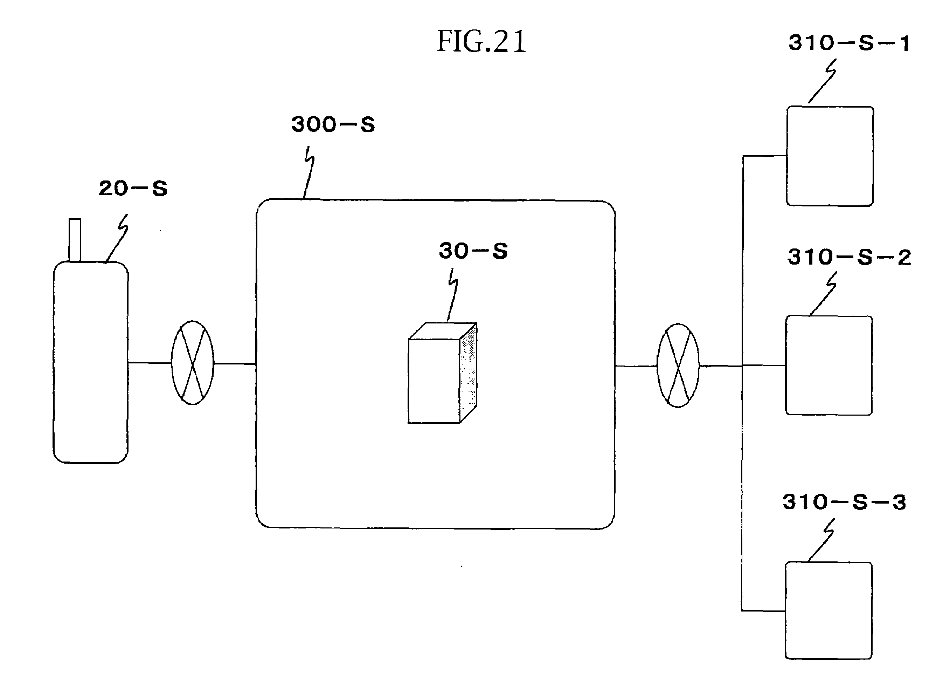

Figure 21 is the diagram showing the system structure of the electronic medical record unitary management system according to an embodiment of the present invention. As shown in Figure 21, the terminal device 20-S can be connected with the rescue center 300-S comprising the server device 30-S via the network. The user converts the user's personal information and medical information to the electronic data based on the same procedure as the inspection service of the medical information such as the medical record shown in Figure 18 and registers them to the server device 30-S. Hereby, the medical records of the medical institutions corresponding to the user can be unitary managed by the rescue support center 300-S, so the rescue support center 300-S can meet the emergency mode immediately. In the case the user is a pregnant woman, for example, the server device 30 stores the personal information and medical information of the pregnant woman, and the personal information and medical information are disclosed by transmitting the transmission command from the mobile phone 20-S owned by the pregnant woman. Therefore, the rescue center 300-S can give an appropriate first aid treatment. In addition, the rescue center 300-S can carry the user to the hospital that can give more appropriate first aid than the rescue center 300-S by connecting the rescue center 300-S with the hospital 310-S-1, 310-S-2 and 310-S-3 via the network. Hereby, the rejection of acceptance by the hospitals can be disappeared. Incidentally, the rescue center 300-S is desirable to cover all fields of the medical treatment and all kinds of the medical equipments, and desirable to open 24 hours a day and 365 days a year. The user is desirable to pay the predetermined fee and hereby the working expenditure of the rescue center 300-S can be contrived.

### (Example 4)

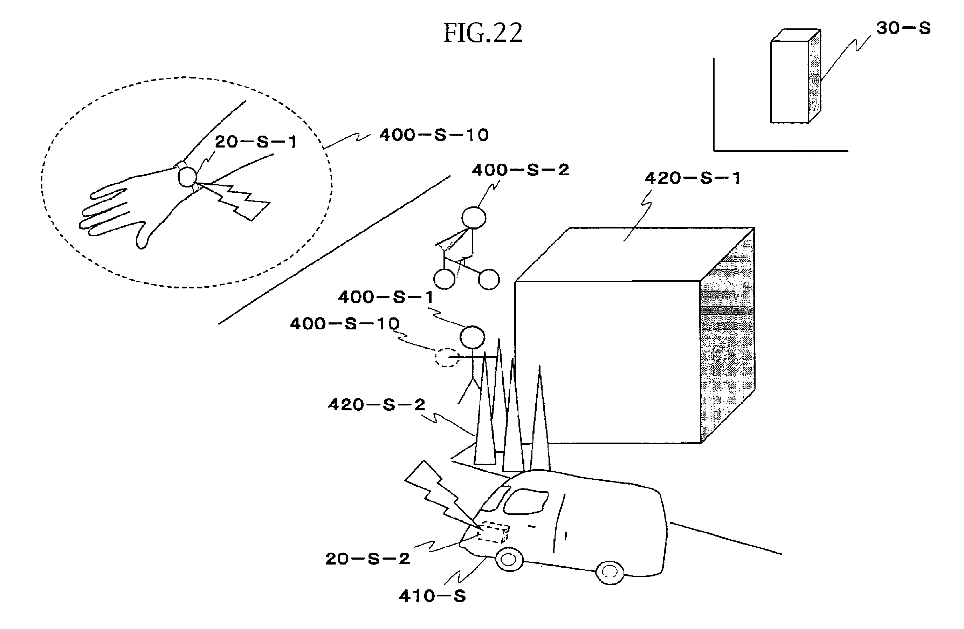

Figure 22 is the diagram showing the utilization state of the user location information recognition system according to an embodiment of the present invention. As shown in Figure 22, the terminal device 20-S of the present system is owned by a walking user 400-S-1 or a user riding on a bicycle 400-S-2. For example, the terminal device 20-S-1 is equipped to a wrist of the walking user 400-S-1 (this example is the wristwatch type, but the necklace type, pencil type etc. can be employed). The location information transmitted from the terminal device 20-S is recognized by the terminal device 20-S-2 equipped on the automobile 410-S via the server device 30-S. Hereby, the collision can be avoided in advance, even if the driver of the automobile 410-S cannot see the approaching of the walking user 400-S-1 due to the predetermined obstacle (for example, the building 420-S-1 and the plants 420-S-2). Furthermore, the collision in the event of the night, rain, fog, snow, storm or other reason causing difficulty of seeing can also be avoided. Incidentally, the terminal device 20-S-1 and 20-S-2 can receive the location information each other via the server device 30. Otherwise, the terminal devices can receive the location information each other without using the server device 30-S and so can avoid the collision by warning when the locations of the terminal devices approaches, by that each of the terminal device comprises a terminal device signal transmission unit that transmits at least one of a electromagnetic wave, a sound wave or a light wave (a visible ray is contained) having the predetermined wave length to another terminal device (not shown in Figures), a terminal device signal receiving unit that receives at least one of the signals (not shown in Figures), a terminal device computation unit that measures a distance to another terminal device by performing the predetermined computation processing using the signal received by the terminal device signal receiving unit (not shown in Figures), a terminal device alarm unit that outputs an alarm based on the distance measured by the terminal device computation unit (not shown in Figures) and a terminal device signal reflection unit that reflects the predetermined signal output from another terminal device signal transmission unit (not shown in Figures) . Incidentally, when a camera is equipped on the automobile 410-S, the present embodiment can employ the mechanism that the camera cooperates with the terminal device 20-S-2 to photograph the situation before and after the collision using the received location information of another terminal device.

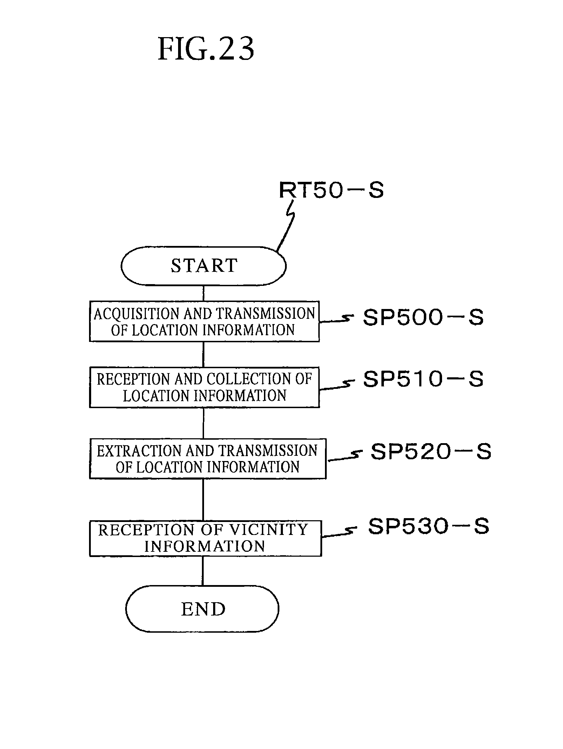

Figure 23 is a flowchart showing the information processing of the user location information recognition system according to an embodiment of the present invention. As shown in Figure 23, when the operation of the present system starts (RT50-S), the terminal device 20-S-1 owned by the user acquires the location information and transmits it to the server device 30-S (see step SP500-S) . The server device 30-S receives and collects the location information (see step SP510-S), furthermore, extracts and transmits the vicinity information to the terminal device 20-S-2 equipped on the automobile 410-S (see step SP520-S). Hereby, the terminal device 20-S-2 can receive the vicinity information (see step SP530-S) and give warning by displaying the screen confirming the receipt of it or outputting the sound effect, voice and so on.

Incidentally, the timing of the warning can be set optionally. For example, it can be set to the timing when the user reaches an area within a circle having the radius of several meters. Moreover, in the case the emergency mode invokes, for instance, at a time when colliding the user it is desirable to perform the rescue support processing RT20-S shown in Figure 10 when the terminal device 20-S detects the impulse of collision and transmits the transmission command.

The above described embodiment corresponds to the case which the rescue support information is registered by operating the mobile phone 20-S, however, for example, the rescue support information can be previously input using a PC, transmitted to the server device 30-S via the internet line and registered to it.

The above described embodiment corresponds to the case which the location information is generated at the predetermined time interval and transmitted to the server device 30-S, however the control unit 100-S can be constructed to generate the location information immediately and transmit it to the server device 30-S when detecting the storage amount of electricity of the battery in the mobile phone 20-S is smaller than the predetermined value at the emergency mode.

Next, the method of the key management underlying the technical idea of the present application is described.

### (Basic pattern 1)

As shown in Figure 6, the key generation unit in the mobile phone terminal automatically generates the encryption key when the physical information (i.e. the basic data) and the TPO are input, the encryption processing unit encrypts the physical information one by one, provides the same encrypted encryption key to each of the encrypted physical information and transmits them to the server 30-S.

When an emergency occurs, the decryption key is transmitted and the information in the server 30-S are decrypted using it. The information of the server 30-S are correlated to the user identification information and the decryption key, and only the information corresponding to the user identification information and the decryption key among the information of the server 30-S are decrypted because the decryption keys are deferent from each owner of the mobile phone terminal.

In this case, the following methods can be executed when the mobile phone is changed by exchanging to one of other types.
1. A new key is generated and the basic data and all of other data are input newly using the new mobile phone terminal.
2. The user identification information and the decryption key in the memory of the old mobile phone terminal are transferred to the new mobile phone terminal. The new mobile phone terminal uses the same user identification information and decryption key as the old mobile phone terminal.
3. The user identification information and the decryption key are encrypted and left in the server 30-S using the old mobile phone terminal, and the user identification information and the decryption key left in the server 30-S are decrypted and used by the new mobile phone terminal.

According to the above described methods, basically, only the owner of the mobile phone terminal generates the encryption key and decryption key in random by initial operation, encrypts and stores the decryption key to the memory in the mobile phone terminal. Even the owner himself (herself) cannot know the decryption key and the encryption key. Once generated, the decryption key and the decryption key cannot be changed. Therefore, even the owner of the mobile phone cannot change them.

### (Basic pattern 2)

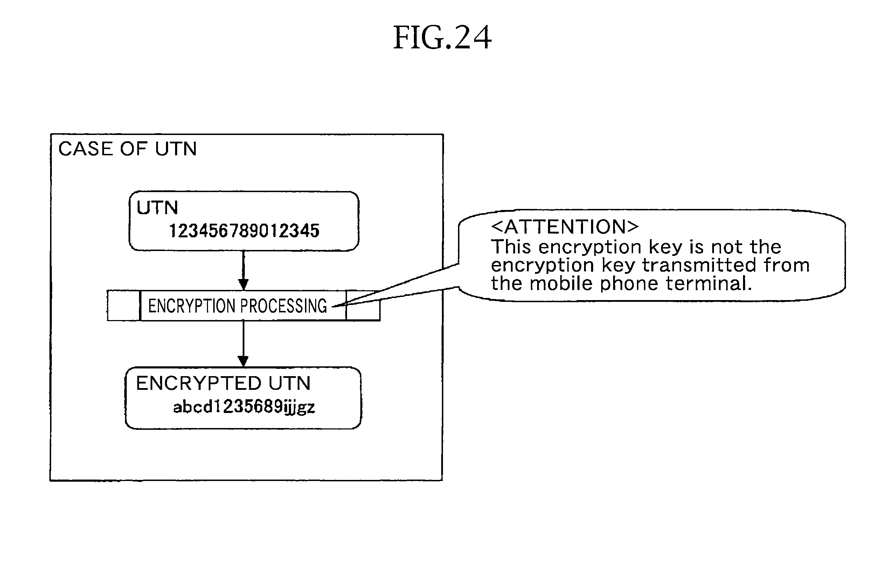

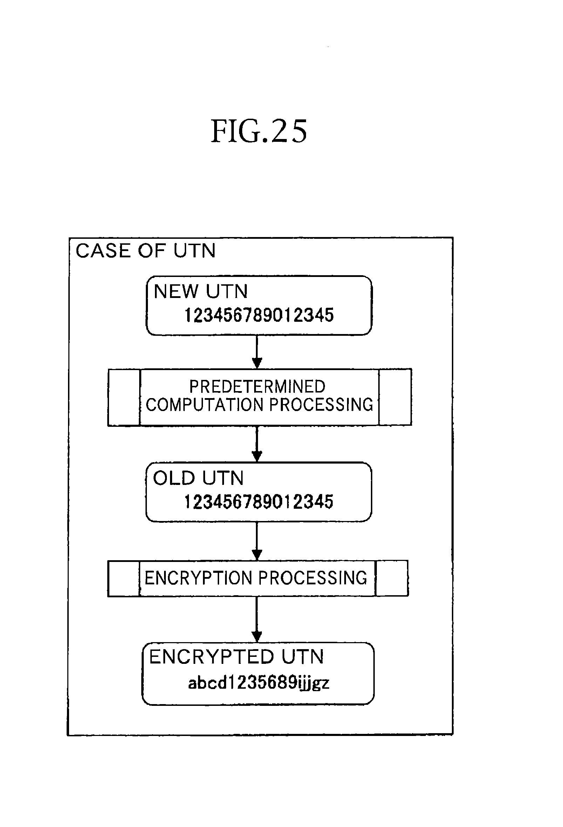

Figure 24 and 25 are conceptual diagrams explaining the correlation of the user identification number (UTN) (fifteen figures) and FOMA (trademark) card identity number (UIM) of the mobile phone terminal with the registered information according to the basic pattern 2 of the present embodiment.

The user identification number (UTN) (fifteen figures) and FOMA (trademark) card identity number (UIM) of the mobile phone terminal are transmitted to the server 30-S to be correlated with the registered information. Figure 24 shows the first certification part of the server 30-S for encrypting and storing the user identification number (UTN). In this case, the encryption key for encryption processing is encrypted in the server device using the common key.

At the encryption of the server device, the same strings of the character and the numeral are encrypted using the same encryption key by the encryption unit of the server 30-S based on the determined encryption method, consequently the same encryption result are obtained.

When the mobile phone is operated, the mobile phone transmits the decryption key, the UTN information, the UIM information and the location information by GPS to the server 30-S firstly.

Next, in the side of the server 30-S, the encrypted UTN information is encrypted once more, the encrypted UTN information in the server 30-S is retrieved without being decrypted. When the data same as the encrypted UTN is retrieved from among the registered data, the server 30-S judges that the certification step is OK and transmits the decryption key to the next step for decrypting the registered data. In this method, the certification item of the certification step may be the UTN, the UIM or the telephone number, moreover may be the combination of such information, for example, the combination of the UTN and the UIM.

When the mobile phone is changed by exchanging to one of other types, the telephone number, the UTN and the UIM are also exchanged, so the change of the certification item is necessary. However, when the new and old UTNs and UIMs are correlated using the following method, there is no need to exchange the initially generated decryption key,. That is, the information required for the mobile phone type exchanging procedure is registered in to the server 30-S using the old mobile phone terminal by performing the predetermined encryption processing which can contain the random number computation in advance, then, the certification using the information registered in the server 30-S for the mobile phone type exchanging procedure is performed using the new mobile phone terminal.

The information required for the mobile phone type exchanging procedure such as the ID, the PW, the telephone number etc. are registered using the old mobile phone terminal in advance, next, the ID, the PW, the telephone number etc. are encrypted and input using the new mobile phone terminal, then, the certification is judged OK only when the input information are matched with the registered information for registered mobile phone type exchanging procedure. In the case the certification is judged OK, the computation processing for calculating the UTM and the UIM of the old mobile phone terminal from that of the new mobile phone terminal is performed, and the value for the computation processing is stored into the server 30-S. As a result, the new UTN can be converted to the old UTN, and the registered information correlated to the old UTN can be usable after completing the mobile phone type exchanging procedure (see figure 25).

### POSSIBILITY OF THE INDUSTRIAL UTILIZATION

According to the information transmission system and the information transmission method of the present invention, the leakage of information can be prevented easily and certainly while reducing the effort for the management of the encryption key. Additionally, the rescue support information necessary for rescue can be stored under the safe condition. Furthermore, the rescue support information can be transmitted to the rescue support organization with simple operation, when the emergency occurs. Therefore, the present invention realizes a great significance in the every aspects of the people in various industry regardless of kind of industry. Consequently, the present invention can be utilized and has high usefulness not only for the information industry, but for all of other industry such as the construction industry, the restaurant business, various kinds of the manufacturing and the distribution industry.

## Claims

1. An information transmission system in which a terminal device and a server device are connected, wherein:
the terminal device comprises;
a terminal device memory unit that stores an user identification information for identifying the user owning the terminal device and stores a decryption key,
an encryption processing unit that encrypts an information using an encryption key,
a terminal device transmission unit that transmits a transmission destination information and a transmission source information encrypted using the encryption key,
a key generation unit that generates the encryption key and the decryption key,
an operation unit that has information input buttons containing a transmission command button,
a terminal device control unit that generates a transmission command, and reads out the user identification information and the decryption key from the terminal device memory unit, when a pushing-down of the transmission command button by the user is notified from the operation unit,
a terminal device transmission unit that transmits the transmission command, the user identification information and/or the decryption key to the sever device: and,
the server device comprises;
a server device memory unit that correlates the transmission destination information containing a information about the destination of the transmission with the transmission source information containing an information about the user owning the terminal device, and stores them,
a decryption unit that reads out the encrypted transmission destination information and the encrypted transmission source information from the server device memory unit based on the user identification information, and decrypts the transmission destination information and the transmission source information using the decryption key, when the transmission command, the user identification information and the decryption key are provided from the terminal device,
a server device control unit that executes the notification and/or cancellation of an emergency mode received from the terminal device and,
a server device transmission unit that transmits the transmission source information to the transmission destination specified by the transmission destination information.

2. The information transmission system according to claim 1, wherein:
the control unit generates a location information of the terminal device one by one at the predetermined time interval when the pushing-down of the transmission command button by the user is notified from the operation unit,
the terminal device transmission unit transmits the location information to the server device one by one at the predetermined time interval, and
the server device transmission unit transmits at least the location information to the transmission destination one by one at the predetermined time interval, when the location information are received one by one at the predetermined time interval.

3. The information transmission system according to claim 1, wherein:
the server device memory unit correlates the transmission destination information and the transmission source information with various kinds of behavioral pattern executed by the user, and stores them, and
the decryption unit reads out and decrypts the stored transmission destination information and the stored transmission source information correlated to the behavioral pattern selected and stored in advance from among the various kinds of the stored behavioral pattern.

4. The information transmission system according to claim 2, wherein the control unit invalidates the operation of shutting-down the power supply with displaying the picture indicating the shutting-down of the power supply on the display unit, and transmits at least the location information to the server device one by one at the predetermined time interval, when the operation of shutting-down the power supply is performed after the notification of the pushing-down of the transmission command button.

5. The information transmission system according to claim 1, wherein the server device transmission unit stops the transmitting of the transmission source information to the transmission destination when the transmission cancellation command is provided from the transmission destination.

6. A information transmission method for information transmission system in which the terminal device and the server device are connected, comprising;
a transmission information generation step of generating a transmission destination information containing an information related to a transmission destination, a transmission source information containing an information related to a user owning the terminal device and an encryption key, encrypting the transmission source information containing the user information using the encryption key, transmitting them to the server device, generating the decryption key and storing the decryption key to a terminal device memory unit,
a storing step of correlating the encrypted transmission destination information and the encrypted transmission source information with a user identification information for identifying the user owning the terminal device, and storing them to the server device memory unit,
a transmission command generation step of generating a transmission command when the user's pushing-down of the transmission command button is notified from an operation unit of the terminal device having the transmission command button, and reading out the user identification information and the decryption key from the terminal device memory unit,
a command transmission step of transmitting the transmission command, the user identification information and the encryption key from the terminal device to the server device,
a decryption step of reading out the encrypted transmission destination information and the encrypted transmission source information from the server device memory unit based on the user identification information when the transmission command, the user identification information and the encryption key are provided from the terminal device, and decrypting the encrypted transmission destination information and the encrypted transmission source information using the encryption key, and
a source information transmission step of transmitting the transmission source information to the transmission destination specified by the transmission destination information.

7. The information transmission method according to claim 6, further comprising;
a location information generation step of generating the location information of the terminal device one by one at a predetermined time interval when the pushing-down of the transmission command button by the user is notified from the operation unit,
a first location information transmission step of transmitting the location information from the terminal device to the server device one by one at the predetermined time interval,
a second location information transmission step of transmitting at least the location information one by one at the predetermined time interval from the server device to the transmission destination when the location information are received one by one at the predetermined time interval.

8. The information transmission method according to claim 6, wherein;
the transmission information generation step is a step of generating the transmission destination information and the transmission source information by the various kinds of the behavioral pattern executed by the user,
the storing step is a step of correlating the transmission destination information and the transmission source information with the various kinds of the behavioral pattern, and storing them to the server device memory unit,
the decryption step is a step of reading out the transmission destination information and the transmission source information stored with being correlated to the behavioral pattern selected and stored in advance from among the various kinds of the behavioral pattern, and decrypting them.

9. The information transmission method according to claim 7, wherein the first location information transmission step is a step of invalidating an operation of shutting-down the power supply with displaying the picture indicating the shutting-down of the power supply on the display unit, and transmits at least the location information to the server device one by one at the predetermined time interval, when the operation of shutting-down the power supply is performed after the notification of the pushing-down of the transmission command button.

10. The information transmission method according to claim 6, further comprising a transmission stopping step of stopping the transmitting of the transmission source information to the transmission destination when the transmission cancellation command is provided from the transmission destination to the server device.

11. The information transmission method according to claim 6, wherein the terminal device comprises a key management device that prevents the leakage of information by an encryption using the encryption key, further comprising;
a first key generation step of generating the encryption key when the specified information for generating the encryption key used for encrypting the object data of encryption is provided,
a second key generation step of generating a decryption key correlated to the encryption key using the specified encryption processing which can contain a user identification information for identifying the user owning the terminal device, the encryption key and random number computation,
a first encryption step of encrypting the user identification information for identifying the user owning the terminal device using the predetermined common key, and
a second encryption step of encrypting the object data of the encryption using the encryption key generated in the first key generation step.

12. The information transmission method according to claim 6, wherein the terminal device comprises a key management device that prevents the leakage of information by an encryption using the encryption key, further comprising;
a third key generation step of generating the encryption key for decrypting the data using the specified encryption processing which can contain the decryption key provided from the terminal device, a user identification information for identifying the user owning the terminal device and random number computation,
a first decryption step of encrypting the user identification information for identifying the user owning the terminal device provided from the terminal device using the predetermined common key, acquiring the object data of encryption stored in the server device memory unit, and decrypting the data using the encryption key generated in the third key generation step.

13. The information transmission method according to claim 6, for making the server device to manage the changing information used for changing the user identification information for identifying the user owning the terminal device, further comprising a storing step of encrypting an old user identification information and a new user identification information using a predetermined common key, and storing them into the server device memory unit, when a request for changing the user identification information for identifying the user owning the terminal device is provided.

14. The information transmission method according to claim 6, for making the server device to manage the changing information used for changing the user identification information for identifying the user owning the terminal device, further comprising a second decryption processing step of acquiring the user identification information for identifying the user owning the old terminal device from the user identification information for identifying the user owning the new terminal device stored in the server device memory unit using the user identification information for identifying the user owning the provided terminal device, when the user identification information for identifying the user owning the terminal device is provided from the terminal device, and decrypting it using the predetermined common key.
